# EUROPÄISCHE PATENTSCHRIFT

(11) **EP 3 226 686 B1**
(45) Veröffentlichungstag und Bekanntmachung des Hinweises auf die Patenterteilung: **21.08.2019**
(21) Anmeldenummer: 15805427.0
(22) Anmeldetag: 01.12.2015
(51) Int. Cl.: A01N 25/06, A01N 25/30, A01N 37/40, A01N 57/20

(54) **VERWENDUNG VON TRIBUTYLPHENOLALKOXYLATEN ZUR VERMINDERUNG DER DRIFT BEI DER APPLIKATION VON PFLANZENBEHANDLUNGSMITTELN**
USE OF TRIBUTYLPHENOLALKOXYLATES FOR REDUCING THE DRIFT DURING THE APPLICATION OF PLANT-TREATMENT AGENTS
UTILISATION DES ALKOXYLATES DE TRIBUTYLPHENOL POUR DIMINUER LA DÉRIVE LORS DE L'APPLICATION D'AGENTS DE TRAITEMENT DES PLANTES

(30) Priorität: 01.12.2014 DE 102014017650
(43) Veröffentlichungstag der Anmeldung: 11.10.2017
(73) Patentinhaber: Clariant International Ltd, 4132 Muttenz (CH)
(72) Erfinder: BAUR, Peter, 86938 Schondorf (DE); MANSOUR, Peter, 55283 Nierstein (DE); BAUER, Martin, 60329 Frankfurt am Main (DE); STAIGER, Siegfried, 65929 Frankfurt am Main (DE)
(74) Vertreter: Paczkowski, Marcus
(86) Internationale Anmeldenummer: PCT/EP2015/078260
(87) Internationale Veröffentlichungsnummer: WO 2016/087473

(56) Entgegenhaltungen:
- WO-A1-2013/189777
- WO-A1-2014/063818
- WO-A1-2015/051899
- WO-A2-2010/051435
- DE-A1- 10 258 856
- EMILIA HILZ ET AL: "Spray drift review: The extent to which a formulation can contribute to spray drift reduction", CROP PROTECTION, Bd. 44, 1. Februar 2013 (2013-02-01), Seiten 75-83, XP55212190, ISSN: 0261-2194, DOI: 10.1016/j.cropro.2012.10.020
- PIETER SPANOGHE ET AL: "Influence of agricultural adjuvants on droplet spectra", PEST MANAGEMENT SCIENCE, Bd. 63, Nr. 1, 1. Januar 2006 (2006-01-01) , Seiten 4-16, XP55216012, ISSN: 1526-498X, DOI: 10.1002/ps.1321
- ALLAN S. FELSOT ET AL: "Agrochemical spray drift; assessment and mitigation-A review*", JOURNAL OF ENVIRONMENTAL SCIENCE AND HEALTH, PART B, Bd. 46, Nr. 1, 30. Dezember 2010 (2010-12-30), Seiten 1-23, XP55215926, ISSN: 0360-1234, DOI: 10.1080/03601234.2010.515161
- "Product Range Crop Protection Edition 2008: Auxiliaries for Crop Protection Formulations", , 1. Januar 2008 (2008-01-01), Seiten 1-36, XP55247231, Muttenz, Switzerland Gefunden im Internet: URL:http://www.clariant.de/C12575E4001FB2B 8/vwLookupDownloads/2008_CropProtection_Ne wsroom_Brochures_CropProtectionProductRang e.pdf/$FILE/2008_CropProtection_Newsroom_B rochures_CropProtectionProductRange.pdf [gefunden am 2016-02-04]

## Beschreibung

Die Erfindung betrifft die Verwendung von bestimmten Tributylphenolalkoxylaten als driftreduzierende Komponenten in Pflanzenbehandlungsmitteln bzw. die Verwendung von bestimmten Tributylphenolalkoxylaten zur Verminderung der Drift bei der Applikation von Pflanzenbehandlungsmitteln, ein Verfahren zur Verminderung der Drift bei der Applikation von Pflanzenbehandlungsmitteln, sowie Mittel zur Driftreduzierung.

Pflanzenschutzmittel werden in sehr effizienter Weise unter Einsatz von Sprühtanks in Flugzeugen, Traktoren oder anderen Vorrichtungen auf landwirtschaftliche Produktionsfelder aufgebracht. Um eine möglichst genaue Platzierung der Wirksubstanzen zu erreichen, ist es erforderlich, einen möglichst engen Sprühkegel zu erhalten und ein Abdriften des Sprühnebels aus dem Zielort heraus zu vermeiden.

Die Drift des Sprühnebels wird im Wesentlichen durch die Tröpfchengrößenverteilung bestimmt. Je kleiner die Tröpfchen, umso länger die Verweilzeit in der Luft und umso größer die Tendenz horizontal abzudriften und zu verdampfen und/oder den Zielort zu verfehlen. Aus der Literatur ist bekannt, dass der Feintropfenanteil < 150 µm (Teske et al., 2004, The Role of Small Droplets in Classifying Drop Size Distributions, ILASS Americas 17th Annual Conference, Arlington VA), insbesondere < 100 µm (Vermeer et al., Proc. ISAA 2013, The use of adjvanted formulations for drift control), den Anteil der Tröpfchen im Sprühnebel bestimmt, der zum Drift-Effekt beiträgt. Die Reduktion des Feintropfenanteils im Sprühnebel ist daher entscheidend für eine Reduktion der Drift und wird daher benutzt, die Drifteigenschaften einer Zusammensetzung zu bestimmen.

Eine deutliche Minimierung des Drift-Effektes kann durch Zusatz geeigneter "drift control agents" zu Pflanzenschutz-Formulierungen erreicht werden, die eine Verminderung des Feintropfenanteils und damit eine Vergrößerung der Tröpfchen im Sprühnebel bewirken. Die mit "drift control agents" modifizierten Formulierungen müssen darüber hinaus gegenüber den Scherkräften, denen sie in den Sprühpumpen und -düsen ausgesetzt sind, unempfindlich sein. Gute biologische Abbaubarkeit, Kompatibilität mit anderen Bestandteilen der Pflanzenschutzmittel, sowie eine hohe Lagerstabilität und Temperaturstabilität sind weitere Anforderungen an "drift control agents". Es ist bekannt, dass die Rheologie wässriger Mittel durch Zusatz wasserlöslicher Polymere, beispielsweise Polyacrylamide, Acrylamid / Acrylsäurepolymere, Natriumpolyacrylat, Carboxymethylcellulose, Hydroxyethylcellulose, Methylcellulose, Polysaccharide, natürlicher und synthetischer guar gum (US-A-4,413,087, US-A-4,505,827, US-A-5,874,096) modifiziert werden kann, die zu einer Verschiebung des Tropfengrößenspektrums hin zu größeren Tropfen führt.

Auch Molasse und organische Verdicker wurden als wirksame Mittel zur Driftreduktion beschrieben (Pesticide Drift III; Drift Reduction with Spray Thickeners; Ware, G.W. et al.; J. of Economic Entomology 63; 1314-1316; 1970). Darüber hinaus ist bekannt, dass bestimmte Emulsionen - über einen nicht vollständig verstandenen Mechanismus - zu einem reduzierten Feintropfenanteil führen (Hilz et al.; Crop Protection 44; 75 - 83; 2013; Spray drift review: The extent to which a formulation can contribute to spray drift reduction). Ferner sind auch selbst-emulgierbare Ester für die Driftreduktion von Pflanzenschutzmitteln geeignet (WO 2010/051435 A2).

Obwohl mit den bekannten Systemen bereits gute Ergebnisse erzielt werden, ist man aus technischen, ökonomischen und ökologischen Gründen weiterhin bestrebt, geeignete "drift control agents" zu finden, die auch unter Praxisbedingungen die Tröpfchenvolumina der wässrigen Mittel effektiv vergrößern und ein Abdriften des Sprühnebels reduzieren. Insbesondere der Antagonismus mit Pflanzenschutzmittel-Formulierungen, Düngern und grenzflächenaktiven Tankmixadditiven limitiert die Wirkung der "drift control agents" und robustere Produkte werden gebraucht.

Überraschenderweise wurde nun gefunden, dass sich bestimmte Tributylphenolalkoxylate als driftreduzierende Adjuvantien für Pflanzenbehandlungsmittel eignen und beim Versprühen dieser Pflanzenbehandlungsmittel eine effektive Vergrößerung der Tröpfchen durch eine Reduktion des Feintropfenanteils im Sprühnebel bewirken. Es wurde somit überraschenderweise gefunden, dass diese bestimmten veretherten Tributylphenolalkoxylate für eine Verwendung zur Verminderung der Drift bei der Applikation von Pflanzenbehandlungsmitteln geeignet sind. Ähnliche Adjuvantien werden in Kombination mit Fettsäureestern in Formulierungen zur Bekämpfung von Schadorganismen eingesetzt (DE 102 58 856 A1).

Gegenstand der Erfindung ist daher die Verwendung eines oder mehrerer 2,4,6-Tri-(2-butyl)phenolalkoxylate der Fomel (I), 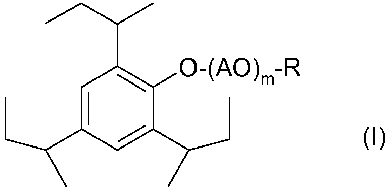 worin
- R: für unverzweigtes oder verzweigtes C₁-C₄-Alkyl, für unverzweigtes oder verzweigtes C₂-C₄-Alkenyl oder für Wasserstoff steht,
- (AO)ₘ: aufgebaut ist aus Ethylenoxid-Einheiten, aufgebaut ist aus Propylenoxid-Einheiten, aufgebaut ist aus Butylenoxid-Einheiten, aufgebaut ist aus Gemischen aus Ethylenoxid- und Propylenoxid-Einheiten oder aufgebaut ist aus Gemischen aus Ethylenoxid- und Butylenoxid-Einheiten, wobei
- m: im Mittel für eine Zahl von 1 bis 30 steht,
zur Verminderung der Drift bei der Applikation von Pflanzenbehandlungsmitteln.

In den Verbindungen der Formel (I) stellt die Variable "m" ein Zahlenmittel dar.

Unter C₁-C₄-Alkyl sind unverzweigte oder verzweigte und gesättigte aliphatische Kohlenwasserstoffreste mit ein bis vier Kohlenstoffatomen zu verstehen. Beispiele dafür sind Methyl, Ethyl, n-Propyl, Isopropyl, n-Butyl, sek.-Butyl oder tert.-Butyl.

Unter C₂-C₄-Alkenyl sind unverzweigte oder verzweigte und ungesättigte aliphatische Kohlenwasserstoffreste mit zwei bis vier Kohlenstoffatomen zu verstehen. Beispiele dafür sind Vinyl, Allyl, Prop-2-enyl, But-1-enyl, But-2-enyl oder But-3-enyl.

Die erfindungsgemäß eingesetzten Tributylphenolalkoxylate sind durch die Formel (I) allgemein definiert. Bevorzugte Restedefinitionen der vorstehenden und nachfolgend genannten Formeln sind im Folgenden angegeben.

Im Rahmen der vorliegenden Erfindung werden die Ethylenoxid-Einheiten (-C₂H₄O-), Propylenoxid-Einheiten (-C₃H₆O-) und Butylenoxid-Einheiten (-C₄H₈O-) im Folgenden auch einfach als EO-, PO- bzw. BO-Einheiten bezeichnet. Besonders bevorzugt steht A für einen 1,2-Ethylen-Rest, einen 1,2-Propylen-Rest, einen 1,2-Butylen-Rest oder für Gemische aus 1, 2-Ethylen- und 1, 2-Propylen-Resten oder für Gemische aus 1,2-Ethylen- und 1,2-Butylen-Resten.

Bevorzugt haben die Symbole und Indizes in der Formel (I) folgende Bedeutungen:
- R: ist bevorzugt unverzweigtes oder verzweigtes C₁-C₄-Alkyl oder Wasserstoff;
- A: ist bevorzugt ein 1,2-Ethylen-Rest, ein 1,2-Propylen-Rest oder ein Gemisch aus 1,2-Ethylen- und 1,2-Propylen-Resten; und/oder
- m: ist bevorzugt eine Zahl von 2 bis 20.

Besonders bevorzugt haben die Symbole und Indizes in der Formel (I) folgende Bedeutungen:
- R: ist besonders bevorzugt Methyl, Ethyl oder Wasserstoff;
- A: ist besonders bevorzugt ein 1,2-Ethylen-Rest, und/oder
- m: ist besonders bevorzugt eine Zahl von 3 bis 10.

Ganz besonders bevorzugt steht R für Methyl oder für Wasserstoff.

Weiterhin ganz besonders bevorzugt ist m eine Zahl von 5 bis 8.

Die erfindungsgemäß eingesetzten Tributylphenolalkoxylate können nach bekannten, dem Fachmann geläufigen Verfahren hergestellt werden. Dazu werden Tributylphenolalkoxylate der Formel (II), 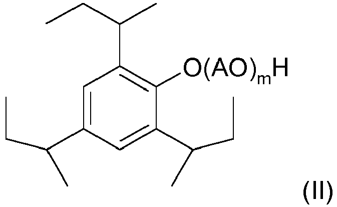 worin A und m die oben angegebenen Bedeutungen haben, mit einem C₁-C₄-Alkylhalogenid oder mit einem C₂-C₄-Alkenylhalogenid , bevorzugt mit einem C₁-C₄-Alkylchlorid, unter Basenkatalyse, bevorzugt mit NaOH, umgesetzt.

Die als Vorstufe eingesetzten Tributylphylalkoxylate der Formel (II) sind kommerziell erhältlich, beispielsweise unter den Sapogenat-Marken von Clariant.

Sie können aus dem entsprechenden Phenol durch Umsetzung mit Alkylenoxiden (EO, PO, BO oder Gemischen daraus) unter Ringöffnung in Gegenwart von Katalysatoren hergestellt werden. Die Verfahrensbedingungen, der Verfahrensablauf und der Katalysator sind dem Fachmann bekannt.

Im Rahmen der vorliegenden Erfindung werden die Ethylenoxid-Einheiten (-C₂H₄O-), Propylenoxid-Einheiten (-C₃H₆O-) und Butylenoxid-Einheiten (-C₄H₈O-) im Folgenden auch einfach als EO-, PO- bzw. BO-Einheiten bezeichnet.

In den Verbindungen der Formel (I) stellt die Variable "m" ein Zahlenmittel dar.

Unter "Pflanzenbehandlungsmitteln" im Sinne der Erfindung werden vorzugsweise Zusammensetzungen verstanden, die ein oder mehrere Substanzen ausgewählt aus der Gruppe bestehend aus Pestiziden, Phytohormonen, vorzugsweise Wachstumsregulatoren, Mitteln zur biologischen Schädlingsbekämpfung, in Wasser ausbringbaren Salzen, vorzugsweise Düngern bzw. Pflanzennährstoffen oder fungiziden Kupfer-Verbindungen, und Repellents enthalten. Die soeben genannten ein oder mehreren Substanzen ausgewählt aus der Gruppe bestehend aus Pestiziden, Phytohormonen, vorzugsweise Wachstumsregulatoren, Mitteln zur biologischen Schädlingsbekämpfung, in Wasser ausbringbaren Salzen, vorzugsweise Düngern bzw. Pflanzennährstoffen oder fungiziden Kupfer-Verbindungen, und Repellents werden im Rahmen der vorliegenden Erfindung als "agrochemische Substanzen" bezeichnet.

Unter "Drift" im Sinne der Erfindung versteht man den Effekt, dass sich beim Versprühen des Pflanzenbehandlungsmittels kleine Tröpfchen bilden, die über die zu behandelnde Fläche hinaus getragen werden können und das Versprühen so weniger effektiv oder sogar schädlich für angrenzende Flächen und Kulturen machen können.

Zusätzlich zur Drift neigen kleinere Tröpfchen zu einer stärkeren Verdunstung, was zu einer verminderten Verfügbarkeit des Wirkstoffs auf der Zielfläche führen kann.

Im Rahmen der vorliegenden Erfindung versteht man unter "Driftreduzierung" bzw. "Verminderung der Drift" vorzugsweise die Verminderung des Anteils der Feintropfen mit einem Durchmesser < 105 µm im Sprühnebel im Vergleich zur Applikation eines Mittels, welches die veretherten Tributylphenolalkoxylaten der Formel (I) nicht enthält, vorzugsweise um mindestens 10 % und besonders bevorzugt um mindestens 25 %.

Es ist bekannt, dass die Anwesenheit von bestimmten Substanzen in wässrigen Spritzbrühen den Feintropfenanteil im Sprühnebel im Vergleich zu wässrigen Spritzbrühen, die diese Substanzen nicht enthalten, erhöht. Werden zu diesen Spritzbrühen mit erhöhtem Feintropfenanteil veretherte Tributylphenolalkoxylate der Formel (I) zugegeben, kann die relative Driftreduzierung sogar noch deutlich höher liegen als oben angegeben.

Unter "Applikation" eines Pflanzenbehandlungsmittels im Sinne der Erfindung versteht man das Aufbringen einer wässrigen Spritzbrühe enthaltend ein oder mehrere agrochemische Substanzen auf die zu behandelnden Pflanzen und/oder auf deren Standort.

Eine andere bevorzugte Ausführungsform der Erfindung ist die Verwendung von Zusammensetzungen enthaltend
a) ein oder mehrere der oben beschriebenen 2,4,6-Tri-(2-butyl)phenolalkoxylate der Fomel (I),
b) ein oder mehrere weitere Tenside und
c) gegebenenfalls ein oder mehrere Lösemittel,
zur Verminderung der Drift bei der Applikation von Pflanzenbehandlungsmitteln.

In einer bevorzugten Ausführungsform der Erfindung beträgt der Anteil der Komponente a) in den erfindungsgemäß eingesetzten Zusammensetzungen vorzugsweise 1 bis 90 Gew.-%, besonders bevorzugt 10 bis 80 Gew.-% und insbesondere bevorzugt 20 bis 70 Gew.-%, der Anteil der Komponente b) vorzugsweise 1 bis 90 Gew.-%, besonders bevorzugt 10 bis 80 Gew.-% und insbesondere bevorzugt 20 bis 70 Gew.-%, und der Anteil der Komponente c) vorzugsweise 0 bis 30 Gew.-%, besonders bevorzugt 0.1 bis 20 Gew.-% und insbesondere bevorzugt 1 bis 10 Gew.-%, jeweils bezogen auf das Gesamtgewicht der Zusammensetzungen.

Bei den in den erfindungsgemäß eingesetzten Zusammensetzungen enthaltenen ein oder mehreren Tensiden der Komponente b) kann es sich um ein einziges Tensid oder um ein Gemisch zweier oder mehrerer Tenside handeln. Bei den Tensiden kann es sich generell um alle mit der Zusammensetzung kompatiblen nichtionischen, amphoteren, kationischen oder anionische Tenside handeln.

Beispiele für nicht-ionische Tenside sind EO/PO-Blockcopolymere (EO: Ethylenoxy-Einheit; PO: Propylenoxy-Einheit), Alkoxylate wie beispielsweise Ethoxylate von längerkettigen aliphatischen Alkoholen (z. B. Alkoxylate und speziell Ethoxylate von linearen oder verzweigten C₈ bis C₂₄-Alkoholen) oder von aromatischen Alkoholen (z. B. Alkylphenolalkoxylate wie beispielsweise Alkylphenolethoxylate, Tristyrylphenolalkoxylate wie beispielsweise Tristyrylphenolethoxylate, und Tri-sec-butylphen-olethoxylate), Rizinusölethoxylate, Ester von langkettigen Carbonsäuren mit ein- oder mehrwertigen Alkoholen sowie deren Ethoxylierungsprodukte, gegebenenfalls ethoxylierte Sorbitanester, Alkylpolyglycoside, Fettaminethoxylate, längerkettige Etheraminalkoxylate und Glucamide. Geeignete amphotere Tenside sind beispielsweise langkettige Alkyldimethylbetaine, Alkyldimethylaminoxide oder Alkyldimethylaminamidopropylaminoxide. Unter den anionischen Tensiden sind beispielsweise Ethersulfate von ethoxylierten Fettalkoholen, Umsetzungsprodukte von (gegebenenfalls ethoxylierten) langkettigen Alkoholen mit Phosphorsäurederivaten, Salze der Dodecylbenzolsulfonsäure und Sulfosuccinate geeignet. Unter "langkettig" werden lineare oder verzweigte Kohlenwasserstoffketten mit mindestens 6 und maximal 22 Kohlenstoffatomen verstanden.

Bei den den gegebenenfalls in den erfindungsgemäß eingesetzten Zusammensetzungen enthaltenen ein oder mehreren Lösemitteln der Komponente c) (auch Cosolventien genannt) kann es sich um ein einziges Lösemittel oder um ein Gemisch zweier oder mehrerer Lösemittel handeln. Dazu eignen sich alle Lösemittel, die mit den Zusammensetzungen kompatibel sind und eine homogene Phase bilden. Geeignete Cosolventien sind beispielsweise polare protische oder aprotische polare Lösemittel, wie einwertige Alkohole, wie Methanol, Ethanol, Propanole, Butanole, oder Benzylalkohol; oder mehrwertige Alkohole, wie Ethylenglykol, Diethylenglykol, Propylenglykol, Dipropylenglykol oder Glycerin; oder Polyglykole, wie Polyethylenglykol, Polypropylenglykol oder gemischte Polyalkylenglykole (PAGs). Weitere geeignete polare organische Lösemittel sind Ether, wie beispielsweise Tetrahydrofuran (THF), Dioxan, Alkylenglykolmonoalkyether und -dialkylether wie z. B. Propylenglykolmonomethylether, Propylenglykolmonoethylether, Propylenglykoldimethylether, Dipropylenglykolmonomethylether oder Dipropylenglykoldimethylether, Ethylenglykolmonomethylether oder - monoethylether, Diglyme und Tetraglyme; oder Amide, wie beispielsweise N-Methylpyrrolidon, N-Ethylpyrrolidon, Milchsäuredimethylamid, Caprylsäuredimethylamid, Decansäuredimethylamid, Dimethylformamid (DMF), Dimethylacetamid und Dimethylcaprinamid (Hallcomide®).

Weitere Beispiele für polare Lösungsmittel sind
- Ketone wie Aceton, Methylethylketon, Methylisobutylketon oder Cyclohexanon;
- Ester auf Basis von Glycerin und Carbonsäuren wie Glycerinmono-, di- und triacetat,
- Lactame,
- Lactatester mit Kettenlängen von 1 bis 10 C-Atomen im Esterteil,
- Kohlensäurediester;
- Nitrile wie Acetonitril, Propionitril, Butyronitril und Benzonitril;
- Sulfoxide und Sulfone wie Dimethylsulfoxid (DMSO) und Sulfolan; und
- insbesondere Wasser.

Geeignete Cosolventien können beispielsweise auch organische unpolare Lösemittel sein. Dazu zählen beispielsweise aromatische Kohlenwasserstoffe, wie Xylol, Toluol oder Alkylnaphthaline; chlorierte aromatische oder chlorierte aliphatische Kohlenwasserstoffe, wie Chlorbenzole, Chlorethylene oder Methylenchlorid; aliphatische Kohlenwasserstoffe, wie Cyclohexan oder Paraffine, z. B. Erdölfraktionen, mineralische oder pflanzliche Öle.

Besonders geeignete Cosolventien sind ein oder mehrwertige Alkohole und insbesondere geeignet sind zwei- oder dreiwertige Alkohole wie Propylenglykol, Dipropylenglykol, Glycerin oder Polyethylenglykol, Polypropylenglykol oder gemischte Polyalkylenglykole (PAGs).

Die Tenside und/oder Cosolventien, können zusätzlich zur Stabilisierung der Zusammensetzung beitragen, indem diese beispielsweise die Kälte- oder Wärmestabilität oder weitere anwendungstechnische Eigenschaften wie die Viskosität positiv beeinflussen.

Die Verbindungen der Formel (I), sowie Zusammensetzungen enthaltend ein oder mehrere Verbindungen der Formel (I) können in allen üblichen Formulierungstypen eingesetzt werden, bevorzugt in flüssigen Formulierungen. Prinzipiell können die Verbindungen aber auch in feste Formulierungen eingebracht werden.

Eine bevorzugte Ausführungsform der Erfindung ist die Verwendung des einen oder der mehreren Tributylphenolalkoxylate der Formel (I) zur Verminderung der Drift bei der Applikation von Pflanzenbehandlungsmitteln als Tank- Mix-Additiv. Bei dieser Ausführungsform werden die Tributylphenolalkoxylate der Formel (I) erst direkt vor dem Ausbringen einer aus einer konzentrierten Formulierung des Pflanzenbehandlungsmittels hergestellten Spritzbrühe zugesetzt.

Eine andere bevorzugte Ausführungsform der Erfindung ist die Verwendung des einen oder der mehreren veretherten Tributylphenolalkoxylate der Formel (I) zur Verminderung der Drift bei der Applikation von Pflanzenbehandlungsmitteln als incan Variante. Bei dieser Ausführungsform werden die Tributylphenolalkoxylate der Formel (I) zusammen mit den Inhaltsstoffen des Pflanzenbehandlungsmittels in eine konzentrierte Formulierung bereits eingebaut und als Spritzbrühe verdünnt mit Wasser ausgebracht.

Die erfindungsgemäße Verwendung des einen oder der mehreren Tributylphenolalkoxylate der Formel (I) oder einer Zusammensetzung enthaltend ein oder mehrere Tributylphenolalkoxylate der Formel (I) erfolgt vorzugsweise in anwendungsfertigen Pflanzenbehandlungsmitteln in Form von Spritzbrühen, wobei die Menge des einen oder der mehreren Tributylphenolalkoxylate der Formel (I) in der Spritzbrühe vorzugsweise von 0,001 bis 5 Gew.-%, besonders bevorzugt von 0,005 bis 3 Gew.-%, insbesondere bevorzugt von 0,01 bis 1 Gew.-% und außerordentlich bevorzugt von 0,03 bis 0,5 Gew.-% beträgt, jeweils bezogen auf das Gesamtgewicht der Spritzbrühe.

Enthält ein Pflanzenbehandlungsmittel mehrere veretherte Tributylphenolalkoxylate, so ist die Mengenangabe als Gesamtgehalt aller veretherten Tributylphenolalkoxylate zu verstehen.

Die oben aufgeführten allgemeinen oder in Vorzugsbereichen aufgeführten Restedefinitionen, Wertebereiche bzw. Erläuterungen können auch untereinander, also zwischen den jeweiligen Bereichen und Vorzugsbereichen beliebig kombiniert werden.

Der Wirkmechanismus der erfindungsgemäß eingesetzten Tributylphenolalkoxylate zur Verminderung der Drift bei der Applikation von Pflanzenbehandlungsmitteln ist grundsätzlich unabhängig von der Art der eingesetzten agrochemischen Substanz. Allerdings kann die Auswahl des optimalen Alkoxylierungsgrads der Tributylphenolalkoxylate für maximale Driftreduktion bei der Applikation, durch in den Pflanzenbehandlungsmitteln gegebenenfalls enthaltenden Trübungspunkt erniedrigenden Substanzen, wie z. B. Wirkstoffsalzen oder anderen Salzen, beeinflusst werden.

Die ein oder mehreren Tributylphenolalkoxylate der Formel (I) können bei der Herstellung von Pflanzenbehandlungsmitteln verwendet werden. Hierbei resultieren erfindungsgemäß verwendete Zusammensetzungen, die ein oder mehrere Tributylphenolalkoxylate der Formel (I) und ein oder mehrere agrochemische Substanzen enthalten.

Unter "Pestiziden" werden im Rahmen der vorliegenden Erfindung Herbizide, Fungizide, Insektizide, Akarizide, Bakterizide, Molluskide, Nematizide und Rodentizide verstanden. Eine Übersicht der relevantesten Pestizide findet sich beispielsweise in "The Pesticide Manual" des British Crop Protection Council, 16th Edition 2012, Editor: C. MacBean. Auf die dort aufgeführten Wirkstoffe wird hiermit ausdrücklich Bezug genommen.

Als Beispiele für Fungizide seien genannt:
(1) Inhibitoren der Ergosterol-Biosynthese, wie beispielsweise Aldimorph, Azaconazol, Bitertanol, Bromuconazol, Cyproconazol, Diclobutrazol, Difenoconazol, Diniconazol, Diniconazol-M, Dodemorph, Dodemorph Acetat, Epoxiconazol, Etaconazol, Fenarimol, Fenbuconazol, Fenhexamid, Fenpropidin, Fenpropimorph, Fluquinconazol, Flurprimidol, Flusilazol, Flutriafol, Furconazol, Furconazol-Cis, Hexaconazol, Imazalil, Imazalil Sulfat, Imibenconazol, Ipconazol, Metconazol, Myclobutanil, Naftifin, Nuarimol, Oxpoconazol, Paclobutrazol, Pefurazoat, Penconazol, Piperalin, Prochloraz, Propiconazol, Prothioconazol, Pyributicarb, Pyrifenox, Quinconazol, Simeconazol, Spiroxamin, Tebuconazol, Terbinafin, Tetraconazol, Triadimefon, Triadimenol, Tridemorph, Triflumizol, Triforin, Triticonazol, Uniconazol, Uniconazol-p, Viniconazol, Voriconazol, 1-(4-Chlorphenyl)-2-(1H-1,2,4-triazol-1-yl)cycloheptanol, Methyl-1-(2,2-dimethyl-2,3-dihydro-1H-inden-1-yl)-1H-imidazol-5-carboxylat, N'-{5-(Difluormethyl)-2-methyl-4-[3-(trimethylsilyl)propoxy]phenyl}-N-ethyl-N-methylimidoformamid, N-Ethyl-N-methyl-N'-{2-methyl-5-(trifluormethyl)-4-[3-(trimethylsilyl)propoxy]phenyl}imidoformamid und O-[1-(4-Methoxyphenoxy)-3,3-dimethylbutan-2-yl]-1H-imidazol-1-carbothioat.
(2) Inhibitoren der Respiration (Atmungsketten-Inhibitoren), wie beispielsweise Bixafen, Boscalid, Carboxin, Diflumetorim, Fenfuram, Fluopyram, Flutolanil, Fluxapyroxad, Furametpyr, Furmecyclox, Isopyrazam Mischung des syn-epimeren Razemates 1RS,4SR,9RS und des anti-empimeren Razemates 1RS,4SR,9SR, Isopyrazam (anti-epimeres Razemat), Isopyrazam (anti-epimeres Enantiomer 1R,4S,9S), Isopyrazam (anti-epimeres Enantiomer 1S,4R,9R), Isopyrazam (syn-epimeres Razemat 1RS,4SR,9RS), Isopyrazam (syn-epimeres Enantiomer 1R,4S,9R), Isopyrazam (syn-epimeres Enantiomer 1S,4R,9S), Mepronil, Oxycarboxin, Penflufen, Penthiopyrad, Sedaxane, Thifluzamid, 1-Methyl-N-[2-(1,1,2,2-tetrafluorethoxy)phenyl]-3-(trifluormethyl)-1H-pyrazol-4-carboxamid, 3-(Difluormethyl)-1-methyl-N-[2-(1,1,2,2-tetrafluorethoxy)phenyl]-1H-pyrazol-4-carboxamid, 3-(Difluormethyl)-N-[4-fluor-2-(1,1,2,3,3,3-hexafluorpropoxy)phenyl]-1-methyl-1H-pyrazol-4-carboxamid, N-[1-(2,4-Dichlorphenyl)-1-methoxypropan-2-yl]-3-(difluormethyl)-1-methyl-1H-pyrazol-4-carboxamid, 5,8-Difluor-N-[2-(2-fluor-4-{[4-(trifluormethyl)pyridin-2-yl]oxy}phenyl)ethyl]quinazolin-4-amin, N-[9-(Dichlormethylen)-1,2,3,4-tetrahydro-1,4-methanonaphthalen-5-yl]-3-(difluormethyl)-1-methyl-1H-pyrazol-4-carboxamid, N-[(1S,4R)-9-(Dichlormethylen)-1,2,3,4-tetrahydro-1,4-methanonaphthalen-5-yl]-3-(difluormethyl)-1-methyl-1H-pyrazol-4-carboxamid und N-[(1R,4S)-9-(Dichlormethylen)-1,2,3,4-tetrahydro-1,4-methanonaphthalen-5-yl]-3-(difluormethyl)-1-methyl-1H-pyrazol-4-carboxamid.
(3) Inhibitoren der Respiration (Atmungsketten-Inhibitoren) am Komplex III der Atumungskette, wie beispielsweise Ametoctradin, Amisulbrom, Azoxystrobin, Cyazofamid, Coumethoxystrobin, Coumoxystrobin, Dimoxystrobin, Enestroburin, Famoxadon, Fenamidon, Fenoxystrobin, Fluoxastrobin, Kresoxim-Methyl, Metominostrobin, Orysastrobin, Picoxystrobin, Pyraclostrobin, Pyrametostrobin, Pyraoxystrobin, Pyribencarb, Triclopyricarb, Trifloxystrobin, (2E)-2-(2-{[6-(3-Chlor-2-methylphenoxy)-5-fluorpyrimidin-4-yl]oxy}phenyl)-2-(methoxyimino)-N-methylethanamid, (2E)-2-(Methoxyimino)-N-methyl-2-(2-{[({(1E)-1-[3-(trifluormethyl)phenyl]ethyliden}-amino)oxy]methyl}phenyl)ethanamid, (2E)-2-(Methoxyimino)-N-methyl-2-{2-[(E)-({1-[3-(trifluormethyl)phenyl]ethoxy}imino)-methyl]phenyl}-ethanamid, (2E)-2-{2-[({[(1E)-1-(3-{[(E)-1-Fluor-2-phenylethenyl]oxy}phenyl)ethyliden]amino}oxy)methyl]phenyl}-2-(methoxyimino)-N-methylethanamid, (2E)-2-{2-[({[(2E,3E)-4-(2,6-Dichlorphenyl)but-3-en-2-yliden]amino}oxy)methyl]phenyl}-2-(methoxyimino)-N-methylethanamid, 2-Chlor-N-(1,1,3-trimethyl-2,3-dihydro-1H-inden-4-yl)pyridin-3-carboxamid, 5-Methoxy-2-methyl-4-(2-{[({(1E)-1-[3-(trifluormethyl)phenyl]ethyliden}amino)oxy]methyl}phenyl)-2,4-dihydro-3H-1,2,4-triazol-3-on, Methyl-(2E)-2-{2-[({cyclopropyl[(4-methoxyphenyl)imino]methyl}-sulfanyl)methyl]phenyl}-3-methoxyprop-2-enoat, N-(3-Ethyl-3,5,5-trimethylcyclohexyl)-3-(formylamino)-2-hydroxybenzamid, 2-{2-[(2,5-Dimethylphenoxy)methyl]phenyl}-2-methoxy-N-methylacetamid und (2R)-2-{2-[(2,5-Dimethylphenoxy)methyl]phenyl}-2-methoxy-N-methylacetamid.
(4) Inhibitoren der Mitose und Zellteilung, wie beispielsweise Benomyl, Carbendazim, Chlorfenazol, Diethofencarb, Ethaboxam, Fluopicolid, Fuberidazol, Pencycuron, Thiabendazol, Thiophanat-Methyl, Thiophanat, Zoxamid, 5-Chlor-7-(4-methylpiperidin-1-yl)-6-(2,4,6-trifluorphenyl)[1,2,4]triazolo[1,5-a]pyrimidin und 3-Chlor-5-(6-chlorpyridin-3-yl)-6-methyl-4-(2,4,6-trifluorphenyl)pyridazin.
(5) Verbindungen mit Multisite-Aktivität, wie beispielsweise Bordeauxmischung, Captafol, Captan, Chlorothalonil, Kupferzubereitungen wie Kupferhydroxid, Kupfernaphthenat, Kupferoxid, Kupferoxychlorid, Kupfersulfat, Dichlofluanid, Dithianon, Dodine, Dodine freie Base, Ferbam, Fluorofolpet, Folpet, Guazatin, Guazatinacetat, Iminoctadin, Iminoctadinalbesilat, Iminoctadintriacetat, Mankupfer, Mancozeb, Maneb, Metiram, Zinkmetiram, Kupfer-Oxin, Propamidin, Propineb, Schwefel und Schwefelzubereitungen wie beispielsweise Calciumpolysulfid, Thiram, Tolylfluanid, Zineb und Ziram.
(6) Resistenzinduktoren, wie beispielsweise Acibenzolar-S-Methyl, Isotianil, Probenazol und Tiadinil.
(7) Inhibitoren der Aminosäure- und Protein-Biosynthese, wie beispielsweise Andoprim, Blasticidin-S, Cyprodinil, Kasugamycin, Kasugamycin Hydrochlorid Hydrat, Mepanipyrim, Pyrimethanil und 3-(5-Fluor-3,3,4,4-tetramethyl-3,4-dihydroisoquinolin-1-yl)quinolin.
(8) Inhibitoren der ATP Produktion, wie beispielsweise Fentin Acetat, Fentin Chlorid, Fentin Hydroxid und Silthiofam.
(9) Inhibitoren der Zellwandsynthese, wie beispielsweise Benthiavalicarb, Dimethomorph, Flumorph, Iprovalicarb, Mandipropamid, Polyoxins, Polyoxorim, Validamycin A und Valifenalat.
(10) Inhibitoren der Lipid- und Membran-Synthese, wie beispielsweise Biphenyl, Chloroneb, Dicloran, Edifenphos, Etridiazol, Iodocarb, Iprobenfos, Isoprothiolan, Propamocarb, Propamocarb Hydrochlorid, Prothiocarb, Pyrazophos, Quintozen, Tecnazene und Tolclofos-Methyl.
(11) Inhibitoren der Melanin-Biosynthese, wie beispielsweise Carpropamid, Diclocymet, Fenoxanil, Fthalid, Pyroquilon, Tricyclazol und 2,2,2-Trifluorethyl {3-methyl-1-[(4-methylbenzoyl)amino]butan-2-yl}carbamat.
(12) Inhibitoren der Nukleinsäuresynthese, wie beispielsweise Benalaxyl, Benalaxyl-M (Kiralaxyl), Bupirimat, Clozylacon, Dimethirimol, Ethirimol, Furalaxyl, Hymexazol, Metalaxyl, Metalaxyl-M (Mefenoxam), Ofurace, Oxadixyl und Oxolinsäure.
(13) Inhibitoren der Signaltransduktion, wie beispielsweise Chlozolinat, Fenpiclonil, Fludioxonil, Iprodion, Procymidon, Quinoxyfen und Vinclozolin.
(14) Entkoppler, wie beispielsweise Binapacryl, Dinocap, Ferimzon, Fluazinam und Meptyldinocap.
(15) Weitere Verbindungen, wie beispielsweise Benthiazol, Bethoxazin, Capsimycin, Carvon, Chinomethionat, Pyriofenon (Chlazafenon), Cufraneb, Cyflufenamid, Cymoxanil, Cyprosulfamide, Dazomet, Debacarb, Dichlorophen, Diclomezin, Difenzoquat, Difenzoquat Methylsulphat, Diphenylamin, Ecomat, Fenpyrazamin, Flumetover, Fluoromid, Flusulfamid, Flutianil, Fosetyl-Aluminium, Fosetyl-Calcium, Fosetyl-Natrium, Hexachlorbenzol, Irumamycin, Methasulfocarb, Methylisothiocyanat, Metrafenon, Mildiomycin, Natamycin, Nickel Dimethyldithiocarbamat, Nitrothal-Isopropyl, Octhilinone, Oxamocarb, Oxyfenthiin, Pentachlorphenol und dessen Salze, Phenothrin, Phosphorsäure und deren Salze, Propamocarb-Fosetylat, Propanosin-Natrium, Proquinazid, Pyrimorph, (2E)-3-(4-Tert-butylphenyl)-3-(2-chlorpyridin-4-yl)-1-(morpholin-4-yl)prop-2-en-1-on, (2Z)-3-(4-Tert-butylphenyl)-3-(2-chlorpyridin-4-yl)-1-(morpholin-4-yl)prop-2-en-1-on, Pyrrolnitrin, Tebufloquin, Tecloftalam, Tolnifanid, Triazoxid, Trichlamid, Zarilamid, (3S,6S,7R,8R)-8-Benzyl-3-[({3-[(isobutyryloxy)methoxy]-4-methoxypyridin-2-yl}carbonyl)amino]-6-methyl-4,9-dioxo-1,5-dioxonan-7-yl 2-methylpropanoat, 1-(4-{4-[(5R)-5-(2,6-Difluorphenyl)-4,5-dihydro-1,2-oxazol-3-yl]-1,3-thiazol-2-yl}piperidin-1-yl)-2-[5-methyl-3-(trifluormethyl)-1H-pyrazol-1-yl]ethanon, 1-(4-{4-[(5S)-5-(2,6-Difluorphenyl)-4,5-dihydro-1,2-oxazol-3-yl]-1,3-thiazol-2-yl}piperidin-1-yl)-2-[5-methyl-3-(trifluormethyl)-1H-pyrazol-1-yl]ethanon, 1-(4-{4-[5-(2,6-Difluorphenyl)-4,5-dihydro-1,2-oxazol-3-yl]-1,3-thiazol-2-yl}piperidin-1-yl)-2-[5-methyl-3-(trifluormethyl)-1H-pyrazol-1-yl]ethanon, 1-(4-Methoxyphenoxy)-3,3-dimethylbutan-2-yl-1H-imidazol-1-carboxylat, 2,3,5,6-Tetrachlor-4-(methylsulfonyl)pyridin, 2,3-Dibutyl-6-chlorthieno[2,3-d]pyrimidin-4(3H)-on, 2,6-Dimethyl-1H,5H-[1,4]dithiino[2,3-c:5,6-c']dipyrrol-1,3,5,7(2H,6H)-tetron, 2-[5-Methyl-3-(trifluormethyl)-1H-pyrazol-1-yl]-1-(4-{4-[(5R)-5-phenyl-4,5-dihydro-1,2-oxazol-3-yl]-1,3-thiazol-2-yl}piperidin-1-yl)ethanon, 2-[5-Methyl-3-(trifluormethyl)-1H-pyrazol-1-yl]-1-(4-{4-[(5S)-5-phenyl-4,5-dihydro-1,2-oxazol-3-yl]-1,3-thiazol-2-yl}piperidin-1-yl)ethanon, 2-[5-Methyl-3-(trifluormethyl)-1H-pyrazol-1-yl]-1-{4-[4-(5-phenyl-4,5-dihydro-1,2-oxazol-3-yl)-1,3-thiazol-2-yl]piperidin-1-yl}ethanon, 2-Butoxy-6-iod-3-propyl-4H-chromen-4-on, 2-Chlor-5-[2-chlor-1-(2,6-difluor-4-methoxyphenyl)-4-methyl-1H-imidazol-5-yl]pyridin, 2-Phenylphenol und dessen Salze, 3-(4,4,5-Trifluor-3,3-dimethyl-3,4-dihydroisoquinolin-1-yl)quinolin, 3,4,5-Trichlorpyridin-2,6-dicarbonitril, 3-[5-(4-Chlorphenyl)-2,3-dimethyl-1,2-oxazolidin-3-yl]pyridin, 3-Chlor-5-(4-chlorphenyl)-4-(2,6-difluorphenyl)-6-methylpyridazin, 4-(4-Chlorphenyl)-5-(2,6-difluorphenyl)-3,6-dimethylpyridazin, 5-Amino-1,3,4-thiadiazol-2-thiol, 5-Chlor-N'-phenyl-N'-(prop-2-in-1-yl)thiophen-2-sulfonohydrazid, 5-Fluor-2-[(4-fluorbenzyl)oxy]pyrimidin-4-amin, 5-Fluor-2-[(4-methylbenzyl)oxy]pyrimidin-4-amin, 5-Methyl-6-octyl[1,2,4]triazolo[1,5-a]pyrimidin-7-amin, Ethyl-(2Z)-3-amino-2-cyan-3-phenylprop-2-enoat, N'-(4-{[3-(4-Chlorbenzyl)-1,2,4-thiadiazol-5-yl]oxy}-2,5-dimethylphenyl)-N-ethyl-N-methylimidoformamid, N-(4-Chlorbenzyl)-3-[3-methoxy-4-(prop-2-in-1-yloxy)phenyl]propanamid, N-[(4-Chlorphenyl)(cyan)methyl]-3-[3-methoxy-4-(prop-2-in-1-yloxy)phenyl]propanamid, N-[(5-Brom-3-chlorpyridin-2-yl)methyl]-2,4-dichlorpyridin-3-carboxamid, N-[1-(5-Brom-3-chlorpyridin-2-yl)ethyl]-2,4-dichlorpyridin-3-carboxamid, N-[1-(5-Brom-3-chlorpyridin-2-yl)ethyl]-2-fluor-4-iodpyridin-3-carboxamid, N-{(E)-[(Cyclopropylmethoxy)imino][6-(difluormethoxy)-2,3-difluorphenyl]methyl}-2-phenylacetamid, N-{(Z)-[(Cyclopropylmethoxy)imino][6-(difluormethoxy)-2,3-difluorphenyl]methyl}-2-phenylacetamid, N'-{4-[(3-Tert-butyl-4-cyano-1,2-thiazol-5-yl)oxy]-2-chlor-5-methylphenyl}-N-ethyl-N-methylimidoformamid, N-Methyl-2-(1-{[5-methyl-3-(trifluormethyl)-1H-pyrazol-1-yl]acetyl}piperidin-4-yl)-N-(1,2,3,4-tetrahydronaphthalen-1-yl)-1,3-thiazol-4-carboxamid, N-Methyl-2-(1-{[5-methyl-3-(trifluormethyl)-1H-pyrazol-1-yl]acetyl}piperidin-4-yl)-N-[(1R)-1,2,3,4-tetrahydronaphthalen-1-yl]-1,3-thiazol-4-carboxamid, N-Methyl-2-(1-{[5-methyl-3-(trifluormethyl)-1H-pyrazol-1-yl]acetyl}piperidin-4-yl)-N-[(1S)-1,2,3,4-tetrahydronaphthalen-1-yl]-1,3-thiazol-4-carboxamid, Pentyl-{6-[({[(1-methyl-1H-tetrazol-5-yl)(phenyl)methyliden]amino}oxy)methyl]pyridin-2-yl}carbamat, Phenazin-1-carbonsäure, Chinolin-8-ol, Chinolin-8-olsulfat(2:1) und Tert-butyl {6-[({[(1-methyl-1H-tetrazol-5-yl)(phenyl)methylen]amino}oxy)methyl]pyridin-2-yl}carbamat.
(16) Weitere Verbindungen, wie beispielsweise 1-Methyl-3-(trifluormethyl)-N-[2'-(trifluormethyl)biphenyl-2-yl]-1H-pyrazol-4-carboxamid, N-(4'-Chlorbiphenyl-2-yl)-3-(difluormethyl)-1-methyl-1H-pyrazol-4-carboxamid, N-(2',4'-Dichlorbiphenyl-2-yl)-3-(difluormethyl)-1-methyl-1H-pyrazol-4-carboxamid, 3-(Difluormethyl)-1-methyl-N-[4'-(trifluormethyl)biphenyl-2-yl]-1H-pyrazol-4-carboxamid, N-(2',5'-Difluorbiphenyl-2-yl)-1-methyl-3-(trifluormethyl)-1H-pyrazol-4-carboxamid, 3-(Difluormethyl)-1-methyl-N-[4'-(prop-1-in-1-yl)biphenyl-2-yl]-1H-pyrazol-4-carboxamid, 5-Fluor-1,3-dimethyl-N-[4'-(prop-1-in-1-yl)biphenyl-2-yl]-1H-pyrazol-4-carboxamid, 2-Chlor-N-[4'-(prop-1-in-1-yl)biphenyl-2-yl]pyridin-3-carboxamid, 3-(Difluormethyl)-N-[4'-(3,3-dimethylbut-1-in-1-yl)biphenyl-2-yl]-1-methyl-1H-pyrazol-4-carboxamid, N-[4'-(3,3-Dimethylbut-1-in-1-yl)biphenyl-2-yl]-5-fluor-1,3-dimethyl-1H-pyrazol-4-carboxamid, 3-(Difluormethyl)-N-(4'-ethinylbiphenyl-2-yl)-1-methyl-1H-pyrazol-4-carboxamid, N-(4'-Ethinylbiphenyl-2-yl)-5-fluor-1,3-dimethyl-1H-pyrazol-4-carboxamid, 2-Chlor-N-(4'-ethinylbiphenyl-2-yl)pyridin-3-carboxamid, 2-Chlor-N-[4'-(3,3-dimethylbut-1-in-1-yl)biphenyl-2-yl]pyridin-3-carboxamid, 4-(Difluormethyl)-2-methyl-N-[4'-(trifluormethyl)biphenyl-2-yl]-1,3-thiazol-5-carboxamid, 5-Fluor-N-[4'-(3-hydroxy-3-methylbut-1-in-1-yl)biphenyl-2-yl]-1,3-dimethyl-1H-pyrazol-4-carboxamid, 2-Chlor-N-[4'-(3-hydroxy-3-methylbut-1-in-1-yl)biphenyl-2-yl]pyridin-3-carboxamid, 3-(Difluormethyl)-N-[4'-(3-methoxy-3-methylbut-1-in-1-yl)biphenyl-2-yl]-1-methyl-1 H-pyrazol-4-carboxamid, 5-Fluor-N-[4'-(3-methoxy-3-methylbut-1-in-1-yl)biphenyl-2-yl]-1,3-dimethyl-1H-pyrazol-4-carboxamid, 2-Chlor-N-[4'-(3-methoxy-3-methylbut-1-in-1-yl)biphenyl-2-yl]pyridin-3-carboxamid, (5-Brom-2-methoxy-4-methylpyridin-3-yl)(2,3,4-trimethoxy-6-methylphenyl)methanon, N-[2-(4-{[3-(4-Chlorphenyl)prop-2-in-1-yl]oxy}-3-methoxyphenyl)ethyl]-N2-(methylsulfonyl)valinamid, 4-Oxo-4-[(2-phenylethyl)amino]butansäure und But-3-yn-1-yl {6-[({[(Z)-(1-methyl-1H-tetrazol-5-yl)(phenyl)methylen]amino}oxy)methyl]pyridin-2-yl}carbamat.

Als Beispiele für Bakterizide seien genannt:
Bronopol, Dichlorophen, Nitrapyrin, Nickel-Dimethyldithiocarbamat, Kasugamycin, Octhilinon, Furancarbonsäure, Oxytetracyclin, Probenazol, Streptomycin, Tecloftalam, Kupfersulfat und andere Kupfer-Zubereitungen.

Als Beispiele für Insektizide, Akarizide und Nematizide seien genannt:
(1) Acetylcholinesterase (AChE) Inhibitoren, wie Carbamate, z. B. Alanycarb, Aldicarb, Bendiocarb, Benfuracarb, Butocarboxim, Butoxycarboxim, Carbaryl, Carbofuran, Carbosulfan, Ethiofencarb, Fenobucarb, Formetanate, Furathiocarb, Isoprocarb, Methiocarb, Methomyl, Metolcarb, Oxamyl, Pirimicarb, Propoxur, Thiodicarb, Thiofanox, Triazamate, Trimethacarb, XMC und Xylylcarb; oder Organophosphate, z. B. Acephate, Azamethiphos, Azinphos-ethyl, Azinphosmethyl, Cadusafos, Chlorethoxyfos, Chlorfenvinphos, Chlormephos, Chlorpyrifos, Chlorpyrifos-methyl, Coumaphos, Cyanophos, Demeton-S-methyl, Diazinon, Dichlorvos/DDVP, Dicrotophos, Dimethoate, Dimethylvinphos, Disulfoton, EPN, Ethion, Ethoprophos, Famphur, Fenamiphos, Fenitrothion, Fenthion, Fosthiazate, Heptenophos, Imicyafos, Isofenphos, Isopropyl O-(methoxyaminothio-phosphoryl) salicylat, Isoxathion, Malathion, Mecarbam, Methamidophos, Methidathion, Mevinphos, Monocrotophos, Naled, Omethoate, Oxydemeton-methyl, Parathion, Parathion-methyl, Phenthoate, Phorate, Phosalone, Phosmet, Phosphamidon, Phoxim, Pirimiphos-methyl, Profenofos, Propetamphos, Prothiofos, Pyraclofos, Pyridaphenthion, Quinalphos, Sulfotep, Tebupirimfos, Temephos, Terbufos, Tetrachlorvinphos, Thiometon, Triazophos, Triclorfon und Vamidothion.
(2) GABA-gesteuerte Chlorid-Kanal-Antagonisten, wie beispielsweise Cyclodienorganochlorine, z. B. Chlordane und Endosulfan; oder Phenylpyrazole (Fiprole), z. B. Ethiprole und Fipronil.
(3) Natrium-Kanal-Modulatoren / Spannungsabhängige Natrium-Kanal-Blocker, wie beispielsweise Pyrethroide, z. B. Acrinathrin, Allethrin, d-cis-trans Allethrin, d-trans Allethrin, Bifenthrin, Bioallethrin, Bioallethrin S-cyclopentenyl Isomer, Bioresmethrin, Cycloprothrin, Cyfluthrin, beta-Cyfluthrin, Cyhalothrin, lambda-Cyhalothrin, gamma-Cyhalothrin, Cypermethrin, alpha-Cypermethrin, beta-Cypermethrin, theta-Cypermethrin, zeta-Cypermethrin, Cyphenothrin [(1R)-trans-Isomere], Deltamethrin, Empenthrin [(EZ)-(1R)-Isomere), Esfenvalerate, Etofenprox, Fenpropathrin, Fenvalerate, Flucythrinate, Flumethrin, tau-Fluvalinate, Halfenprox, Imiprothrin, Kadethrin, Permethrin, Phenothrin [(1R)-trans-Isomer), Prallethrin, Pyrethrine (pyrethrum), Resmethrin, Silafluofen, Tefluthrin, Tetramethrin, Tetramethrin [(1R)-Isomere)], Tralomethrin und Transfluthrin; oder DDT; oder Methoxychlor.
(4) Nikotinerge Acetylcholin-Rezeptor (nAChR) Agonisten, wie beispielsweise Neonikotinoide, z. B. Acetamiprid, Clothianidin, Dinotefuran, Imidacloprid, Nitenpyram, Thiacloprid und Thiamethoxam; oder Nikotin.
(5) Nikotinerge Acetylcholin-Rezeptor (nAChR) allosterische Aktivatoren, wie beispielsweise Spinosine, z. B. Spinetoram und Spinosad.
(6) Chlorid-Kanal-Aktivatoren, wie beispielsweise Avermectine/Milbemycine, z. B. Abamectin, Emamectin-benzoat, Lepimectin und Milbemectin.
(7) Juvenilhormon-Imitatoren, wie beispielsweise Juvenilhormon-Analoge, z. B. Hydroprene, Kinoprene und Methoprene; oder Fenoxycarb; oder Pyriproxyfen.
(8) Wirkstoffe mit unbekannten oder nicht spezifischen Wirkmechanismen, wie beispielsweise Alkylhalide, z. B. Methylbromid und andere Alkylhalide; oder Chloropicrin; oder Sulfurylfluorid; oder Borax; oder Brechweinstein.
(9) Selektive Fraßhemmer, z. B. Pymetrozine; oder Flonicamid.
(10) Milbenwachstumsinhibitoren, z. B. Clofentezine, Hexythiazox und Diflovidazin; oder Etoxazole.
(11) Mikrobielle Disruptoren der Insektendarmmembran, z. B. Bacillus thuringiensis Subspezies israelensis, Bacillus sphaericus, Bacillus thuringiensis Subspezies aizawai, Bacillus thuringiensis Subspezies kurstaki, Bacillus thuringiensis Subspezies tenebrionis und BT Pflanzenproteine: Cry1Ab, Cry1Ac, Cry1Fa, Cry2Ab, mCry3A, Cry3Ab, Cry3Bb, Cry34/35Ab1.
(12) Inhibitoren der oxidativen Phosphorylierung, ATP-Disruptoren, wie beispielsweise Diafenthiuron; oder Organozinnverbindungen, z. B. Azocyclotin, Cyhexatin und Fenbutatin-oxid; oder Propargite; oder Tetradifon.
(13) Entkoppler der oxidativen Phoshorylierung durch Unterbrechung des H-Protongradienten, wie beispielsweise Chlorfenapyr, DNOC und Sulfluramid.
(14) Nikotinerge Acetylcholin-Rezeptor-Antagonisten, wie beispielsweise Bensultap, Cartap-hydrochlorid, Thiocyclam und Thiosultap-Natrium.
(15) Inhibitoren der Chitinbiosynthese, Typ 0, wie beispielsweise Bistrifluron, Chlorfluazuron, Diflubenzuron, Flucycloxuron, Flufenoxuron, Hexaflumuron, Lufenuron, Novaluron, Noviflumuron, Teflubenzuron und Triflumuron.
(16) Inhibitoren der Chitinbiosynthese, Typ 1, wie beispielsweise Buprofezin.
(17) Häutungsstörende Wirkstoffe, Dipteran, wie beispielsweise Cyromazine.
(18) Ecdyson-Rezeptor Agonisten, wie beispielsweise Chromafenozide, Halofenozide, Methoxyfenozide und Tebufenozide.
(19) Oktopaminerge Agonisten, wie beispielsweise Amitraz.
(20) Komplex-III-Elektronentransportinhibitoren, wie beispielsweise Hydramethylnon; oder Acequinocyl; oder Fluacrypyrim.
(21) Komplex-I-Elektronentransportinhibitoren, beispielsweise METI-Akarizide, z. B. Fenazaquin, Fenpyroximate, Pyrimidifen, Pyridaben, Tebufenpyrad und Tolfenpyrad; oder Rotenone (Derris).
(22) Spannungsabhängige Natriumkanal-Blocker, z. B. Indoxacarb; oder Metaflumizone.
(23) Inhibitoren der Acetyl-CoA-Carboxylase, wie beispielsweise Tetron- und Tetramsäurederivate, z. B. Spirodiclofen, Spiromesifen und Spirotetramat.
(24) Komplex-IV-Elektronentransportinhibitoren, wie beispielsweise Phosphine, z. B. Aluminiumphosphid, Calciumphosphid, Phosphin und Zinkphosphid; oder Cyanid.
(25) Komplex-II-Elektronentransportinhibitoren, wie beispielsweise Cyenopyrafen.
(28) Ryanodinrezeptor-Effektoren, wie beispielsweise Diamide, z. B. Chlorantraniliprole und Flubendiamide.

Weitere Wirkstoffe mit unbekanntem Wirkmechanismus, wie beispielsweise Amidoflumet, Azadirachtin, Benclothiaz, Benzoximate, Bifenazate, Bromopropylate, Chinomethionat, Cryolite, Cyantraniliprole (Cyazypyr), Cyflumetofen, Dicofol, Diflovidazin, Fluensulfone, Flufenerim, Flufiprole, Fluopyram, Fufenozide, Imidaclothiz, Iprodione, Pyridalyl, Pyrifluquinazon und lodmethan; sowie des weiteren Präparate auf Basis von Bacillus firmus (I-1582, BioNeem, Votivo).

Als Beispiele für Herbizide seien genannt:
Acetochlor, Acibenzolar, Acibenzolar-S-methyl, Acifluorfen, Acifluorfen-sodium, Aclonifen, Alachlor, Allidochlor, Alloxydim, Alloxydim-sodium, Ametryn, Amicarbazone, Amidochlor, Amidosulfuron, Aminocyclopyrachlor, Aminocyclopyrachlor-kalium, Aminocyclopyrachlor-methyl, Aminopyralid, Amitrole, Ammoniumsulfamat, Ancymidol, Anilofos, Asulam, Atrazine, Aviglycin, Azafenidin, Azimsulfuron, Aziprotryn, Beflubutamid, Benazolin, Benazolin-ethyl, Bencarbazone, Benfluralin, Benfuresate, Bensulide, Bensulfuron, Bensulfuronmethyl, Bentazone, Benzfendizone, Benzobicyclon, Benzofenap, Benzofluor, Benzoylprop, Benzyladenin, Bicyclopyrone, Bifenox, Bilanafos, Bilanafos-natrium, Bispyribac, Bispyribac-natrium, Bromacil, Bromobutide, Bromofenoxim, Bromoxynil, Bromuron, Buminafos, Busoxinone, Butachlor, Butafenacil, Butamifos, Butenachlor, Butralin, Butroxydim, Butylate, Cafenstrole, Carbaryl, Carbetamide, Carfentrazone, Carfentrazone-ethyl, Carvone, Chlorcholinchlorid, Chlomethoxyfen, Chloramben, Chlorazifop, Chlorazifop-butyl, Chlorbromuron, Chlorbufam, Chlorfenac, Chlorfenac-natrium, Chlorfenprop, Chlorflurenol, Chlorflurenol-methyl, Chloridazon, Chlorimuron, Chlorimuron-ethyl, Chlormequat-chlorid, Chlornitrofen, 4-Chlorophenoxyacetic acid, Chlorophthalim, Chlorpropham, Chlorthal-dimethyl, Chlorotoluron, Chlorsulfuron, Cinidon, Cinidon-ethyl, Cinmethylin, Cinosulfuron, Clethodim, Clodinafop, Clodinafop-propargyl, Clofencet, Clomazone, Clomeprop, Cloprop, Clopyralid, Cloransulam, Cloransulam-methyl, Cloxyfonac, Cumyluron, Cyanamide, Cyanazine, Cyclanilide, Cycloate, Cyclosulfamuron, Cycloxydim, Cycluron, Cyhalofop, Cyhalofop-butyl, Cyperquat, Cyprazine, Cyprazole, Cytokinine, 2,4-D, 2,4-DB, Daimuron/Dymron, Dalapon, Daminozide, Dazomet, n-Decanol, Desmedipham, Desmetryn, Detosyl-Pyrazolate (DTP), Diallate, Diaminozid, Dicamba, Dichlobenil, Dichlorprop, Dichlorprop-P, Diclofop, Diclofopmethyl, Diclofop-P-methyl, Diclosulam, Diethatyl, Diethatyl-ethyl, Difenoxuron, Difenzoquat, Diflufenican, Diflufenzopyr, Diflufenzopyr-natrium, Dikegulac-sodium, Dimefuron, Dimepiperate, Dimethachlor, Dimethametryn, Dimethenamid, Dimethenamid-P, Dimethipin, Dimetrasulfuron, Dinitramine, Dinoseb, Dinoterb, Diphenamid, Diisopropylnaphthalene, Dipropetryn, Diquat, Diquat-dibromide, Dithiopyr, Diuron, DNOC, Eglinazine-ethyl, Endothal, EPTC, Esprocarb, Ethalfluralin, Ethametsulfuron, Ethametsulfuron-methyl, Ethylnaphthylacetat, Ethephon, Ethidimuron, Ethiozin, Ethofumesate, Ethoxyfen, Ethoxyfen-ethyl, Ethoxysulfuron, Etobenzanid, F-5331, d.h. N-[2-Chlor-4-fluor-5-[4-(3-fluorpropyl)-4,5-dihydro-5-oxo-1H-tetrazol-1-yl]-phenyl]-ethansulfonamid, F-7967, d. h. 3-[7-Chlor-5-fluor-2-(trifluormethyl)-1H-benzimidazol-4-yl]-1-methyl-6-(trifluormethyl) pyrimidin-2,4(1H,3H)-dion, Fenoprop, Fenoxaprop, Fenoxaprop-P, Fenoxaprop-ethyl, Fenoxaprop-P-ethyl, Fenoxasulfone, Fentrazamide, Fenuron, Flamprop, Flamprop-M-isopropyl, Flamprop-M-methyl, Flazasulfuron, Florasulam, Fluazifop, Fluazifop-P, Fluazifop-butyl, Fluazifop-P-butyl, Fluazolate, Flucarbazone, Flucarbazone-sodium, Flucetosulfuron, Fluchloralin, Flufenacet (Thiafluamide), Flufenpyr, Flufenpyr-ethyl, Flumetralin, Flumetsulam, Flumiclorac, Flumiclorac-pentyl, Flumioxazin, Flumipropyn, Fluometuron, Fluorodifen, Fluoroglycofen, Fluoroglycofen-ethyl, Flupoxam, Flupropacil, Flupropanate, Flupyrsulfuron, Flupyrsulfuron-methyl-sodium, Flurenol, Flurenol-butyl, Fluridone, Flurochloridone, Fluroxypyr, Fluroxypyr-meptyl, Flurprimidol, Flurtamone, Fluthiacet, Fluthiacet-methyl, Fluthiamide, Fomesafen, Foramsulfuron, Forchlorfenuron, Fosamine, Furyloxyfen, Gibberellinsäure, Glufosinate, Glufosinate-ammonium, Glufosinate-P, Glufosinate-P-ammonium, Glufosinate-P-natrium, Glyphosate, Glyphosate-isopropylammonium, H-9201, d. h. O-(2,4-Dimethyl-6-nitrophenyl)-O-ethyl-isopropylphosphor amidothioat, Halosafen, Halosulfuron, Halosulfuron-methyl, Haloxyfop, Haloxyfop-P, Haloxyfopethoxyethyl, Haloxyfop-P-ethoxyethyl, Haloxyfop-methyl, Haloxyfop-P-methyl, Hexazinone, HW-02, d. h. 1-(Dimethoxyphosphoryl)-ethyl-(2,4-dichlorphenoxy)acetat, Imazamethabenz, Imazamethabenz-methyl, Imazamox, Imazamox-ammonium, Imazapic, Imazapyr, Imazapyr-isopropylammonium, Imazaquin, Imazaquin-ammonium, Imazethapyr, Imazethapyr-ammonium, Imazosulfuron, Inabenfide, Indanofan, Indaziflam, Indolessigsäure (IAA), 4-Indol-3-ylbuttersäure (IBA), lodosulfuron, lodosulfuron-methyl-natrium, lofensulfuron, lofensulfuron-natrium, loxynil, Ipfencarbazone, Isocarbamid, Isopropalin, Isoproturon, Isouron, Isoxaben, Isoxachlortole, Isoxaflutole, Isoxapyrifop, KUH-043, d. h. 3-({[5-(Difluormethyl)-1-methyl-3-(trifluormethyl)-1H-pyrazol-4-yl]methyl}sulfonyl)-5,5-dimethyl-4,5-dihydro-1,2-oxazol, Karbutilate, Ketospiradox, Lactofen, Lenacil, Linuron, Maleinsäurehydrazid, MCPA, MCPB, MCPBmethyl, -ethyl und -natrium, Mecoprop, Mecoprop-natrium, Mecoprop-butotyl, Mecoprop-P-butotyl, Mecoprop-P-dimethylammonium, Mecoprop-P-2-ethylhexyl, Mecoprop-P-kalium, Mefenacet, Mefluidide, Mepiquat-chlorid, Mesosulfuron, Mesosulfuron-methyl, Mesotrione, Methabenzthiazuron, Metam, Metamifop, Metamitron, Metazachlor, Metazasulfuron, Methazole, Methiopyrsulfuron, Methiozolin, Methoxyphenone, Methyldymron, 1-Methylcyclopropen, Methylisothiocyanat, Metobenzuron, Metobromuron, Metolachlor, S-Metolachlor, Metosulam, Metoxuron, Metribuzin, Metsulfuron, Metsulfuron-methyl, Molinate, Monalide, Monocarbamide, Monocarbamide-dihydrogensulfat, Monolinuron, Monosulfuron, Monosulfuron-ester, Monuron, MT-128, d. h. 6-Chlor-N-[(2E)-3-chlorprop-2-en-1-yl]-5-methyl-N-phenylpyridazin-3-amin, MT-5950, d. h. N-[3-Chlor-4-(1-methylethyl)-phenyl]-2-methylpentanamid, NGGC-011, 1-Naphtylacetic Acid (NAA), Naphthylacetamid (NAAm), 2-Naphtoxyacetic Acid, Naproanilide, Napropamide, Naptalam, NC-310, d. h. 4-(2,4-Dichlorobenzoyl)-1-methyl-5-benzyloxypyrazole, Neburon, Nicosulfuron, Nipyraclofen, Nitralin, Nitrofen, Nitroguaiacolate, Nitrophenolat-natrium (Isomerengemisch), Nitrofluorfen, Nonansäure, Norflurazon, Orbencarb, Orthosulfamuron, Oryzalin, Oxadiargyl, Oxadiazon, Oxasulfuron, Oxaziclomefone, Oxyfluorfen, Paclobutrazol, Paraquat, Paraquat-dichlorid, Pelargonsäure (Nonansäure), Pendimethalin, Pendralin, Penoxsulam, Pentanochlor, Pentoxazone, Perfluidone, Pethoxamid, Phenisopham, Phenmedipham, Phenmedipham-ethyl, Picloram, Picolinafen, Pinoxaden, Piperophos, Pirifenop, Pirifenop-butyl, Pretilachlor, Primisulfuron, Primisulfuron-methyl, Probenazole, Profluazol, Procyazine, Prodiamine, Prifluraline, Profoxydim, Prohexadione, Prohexadione-calcium, Prohydrojasmone, Prometon, Prometryn, Propachlor, Propanil, Propaquizafop, Propazine, Propham, Propisochlor, Propoxycarbazone, Propoxycarbazone-natrium, Propyrisulfuron, Propyzamide, Prosulfalin, Prosulfocarb, Prosulfuron, Prynachlor, Pyraclonil, Pyraflufen, Pyraflufen-ethyl, Pyrasulfotole, Pyrazolynate (Pyrazolate), Pyrazosulfuron, Pyrazosulfuron-ethyl, Pyrazoxyfen, Pyribambenz, Pyribambenzisopropyl, Pyribambenz-propyl, Pyribenzoxim, Pyributicarb, Pyridafol, Pyridate, Pyriftalid, Pyriminobac, Pyriminobac-methyl, Pyrimisulfan, Pyrithiobac, Pyrithiobacnatrium, Pyroxasulfone, Pyroxsulam, Quinclorac, Quinmerac, Quinoclamine, Quizalofop, Quizalofop-ethyl, Quizalofop-P, Quizalofop-P-ethyl, Quizalofop-P-tefuryl, Rimsulfuron, Saflufenacil, Secbumeton, Sethoxydim, Siduron, Simazine, Simetryn, SN-106279, d. h. Methyl-(2R)-2-({7-[2-chlor-4-(trifluormethyl)phenoxy]-2-naphthyl}oxy)propanoat, Sulcotrione, Sulfallate (CDEC), Sulfentrazone, Sulfometuron, Sulfometuron-methyl, Sulfosate (Glyphosate-trimesium), Sulfosulfuron, SW-065, SYN-523, SYP-249, d. h. 1-Ethoxy-3-methyl-1-oxobut-3-en-2-yl-5-[2-chlor-4-(trifluormethyl)phenoxy]-2-nitrobenzoat, SYP-300, d. h. 1-[7-Fluor-3-oxo-4-(prop-2-in-1-yl)-3,4-dihydro-2H-1,4-benzoxazin-6-yl]-3-propyl-2-thioxoimidazolidin-4,5-dion, Tebutam, Tebuthiuron, Tecnazene, Tefuryltrione, Tembotrione, Tepraloxydim, Terbacil, Terbucarb, Terbuchlor, Terbumeton, Terbuthylazine, Terbutryn, Thenylchlor, Thiafluamide, Thiazafluron, Thiazopyr, Thidiazimin, Thidiazuron, Thiencarbazone, Thiencarbazone-methyl, Thifensulfuron, Thifensulfuron-methyl, Thiobencarb, Tiocarbazil, Topramezone, Tralkoxydim, Triafamone, Triallate, Triasulfuron, Triaziflam, Triazofenamide, Tribenuron, Tribenuron-methyl, Tribufos, Trichloressigsäure (TCA), Triclopyr, Tridiphane, Trietazine, Trifloxysulfuron, Trifloxysulfuron-natrium, Trifluralin, Triflusulfuron, Triflusulfuron-methyl, Trimeturon, Trinexapac, Trinexapac-ethyl, Tritosulfuron, Tsitodef, Uniconazole, Uniconazole-P und Vernolate, ZJ-0862, d.h. 3,4-Dichlor-N-{2-[(4,6-dimethoxypyrimidin-2-yl)oxy]benzyl}anilin, sowie die folgenden Verbindungen:

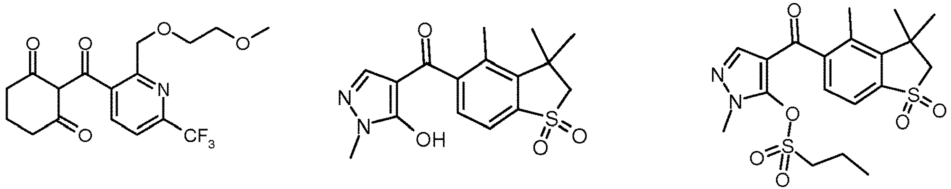

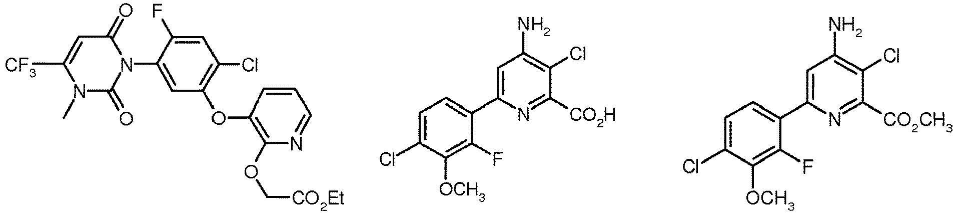

Phytohormone steuern physiologische Reaktionen, wie Wachstum, Blührhythmus, Zellteilung und Samenreifung. Als Beispiele für Wachstumsregulatoren seien genannt natürliche und synthetische Pflanzenhormone, wie Abszissinsäure, Benzyladenin, Caprylsäure, Decanol, Indolessigsäure, Jasmonsäure bzw. deren Ester, Salicylsäure bzw. deren Ester, Gibberellinsäure, Kinetin und Brassinosteroide.

Mittel zur Biologischen Kontrolle sind dem Fachmann bekannt und werden beispielsweise in "The Manual of Biocontrol Agents: A World Compendium, Copping, L. G., BCPC 2009" beschrieben.

Als Beispiele für Pflanzennährstoffe seien übliche anorganische oder organische Dünger zur Versorgung von Pflanzen mit Makro- und/oder Mikronährstoffen genannt.

Als Beispiele für Repellents seien Diethyltolylamid, Ethylhexandiol und Butopyronoxyl genannt.

Die agrochemischen Substanzen werden vorzugsweise ausgewählt aus der Gruppe bestehend aus Herbiziden, Insektiziden, Fungiziden und Wachstumsregulatoren. Besonders bevorzugt werden die agrochemischen Substanzen ausgewählt aus der Gruppe bestehend aus Herbiziden und Wachstumsregulatoren.

Bevorzugte Fungizide sind aliphatische Stickstofffungizide, Amidfungizide wie Acylaminosäurefungizide oder Anilidfungizide oder Benzamidfungizide oder Strobilurinfungizide, aromatische Fungizide, Benzimidazolfungizide, Benzothiazolfungizide, Carbamatfungizide, Conazolfungizide wie Imidazole oder Triazole, Dicarboximidfungizide, Dithiocarbamatfungizide, Imidazolfungizide, Morpholinfungizide, Oxazolfungizide, Pyrazolfungizide, Pyridinfungizide, Pyrimidinfungizide, Pyrrolfungizide, Chinonfungizide und Spiroketalamine. Besonders bevorzugt sind die Fungizide ausgewählt aus der Gruppe bestehend aus Morpholinfungiziden, vorzugsweise Fenpropidin oder Fenpropimorph, und Spiroketalaminen, vorzugsweise Spiroxamin. Diese Fungizide zeichnen sich insbesondere durch eine hohe Humantoxizität in sublethalen Dosen aus.

Bevorzugte Insektizide sind Carbamatinsektizide, wie Benzofuranylmethylcarbamat- Insektizide oder Dimethylcarbamat-Insektizide oder Oximcarbamat-Insektizide oder Phenylmethylcarbamatinsektizide, Diamidinsektizide, Insektenwachstumsregulatoren, Macrozyklische Lactoneinsektizide wie Avermectin-Insektizide oder Milbemycin-Insektizide oder Spinosyninsektizide, Nereistoxin analoge Insektizide, Neonicotinoide, Nicotinoidinsektizide wie Nitroguanidinnicotinoid-Insektizide oder Pyridylmethylaminnicotinoid-Insektizide, Organophosphorinsektizide wie Organophosphatinsektizide oder Organothiophosphatinsektizide oder Phosphonatinsektizide oder Phosphoramidothioatinsektizide, Oxadiazininsektizide, Pyrazolinsektizide, Pyrethroidinsektizide wie Pyrethroidester-Insektizide oder Pyrethroidether-Insektizide oder Pyrethroidoxim-Insektizide, Tetramsäureinsektizide, Tetrahydrofurandioninsektizide, Thiazolinsektizide. Besonders bevorzugt sind die Insektizide ausgewählt aus der Gruppe bestehend aus Organophosphorinsektiziden, vorzugsweise Dimethoat, und Neonicotinoiden. Diese Insektizide zeichnen sich insbesondere durch eine hohe Toxizität gegenüber Nützlingen und Bienen in sublethalen Dosen aus.

Bevorzugte Herbizide sind Amidherbizide, Anilidherbizide, aromatische Säureherbizide wie Benzoesäureherbizide oder Picolinisäureherbizide, Benzoylcyclohexanedionherbizide, Benzofuranylalkylsulfonatherbizide, Benzothiazolherbizide, Carbamatherbizide, Carbanilatherbizide, Cyclohexenoximherbizide, Cyclopropylisoxazolherbizide, Dicarboximidherbizide, Dinitroanilinherbizide, Dinitrophenolherbizide, Diphenyletherherbizide, Dithiocarbamatherbizide, Glycinderivatherbizide, Imidazolinonherbizide, Isoxazolherbizide, Isoxazolidinonherbizide, Nitrilherbizide, Organophosphorherbizide, Oxadiazolonherbizide, Oxazolherbizide, Phenoxyherbizide wie Phenoxyessigsäureherbizide oder Phenoxybutansäureherbizide oder Phenoxypropionsäureherbizide oder Aryloxyphenoxypropiosäureherbizide, Phenylpyrazolinherbizide, Pyrazolherbizide wie Benzoylpyrazolherbizide oder Phenylpyrazolherbizide, Pyridazinonherbizide, Pyridinherbizide, Pyrimidindionherbizide, Thiocarbamatherbizide, Triazinherbizide, Triazinonherbizide, Triazolherbizide, Triazolonherbizide, Triazolopyrimidinherbizide, Triketonherbizide, Uracilherbizide, Ureaherbizide wie Phenylharnstoffherbizide oder Sulfonylharnstoffherbizide. Besonders bevorzugt sind die Herbizide ausgewählt aus der Gruppe bestehend aus Benzoesäureherbiziden, vorzugsweise Dicamba oder deren Salze, Cyclohexenoximherbiziden, vorzugsweise Clethodim, Diphenyletherherbiziden, vorzugsweise Aclonifen, Isoxazolidinonherbiziden, vorzugsweise Clomazon, und Phenoxyherbiziden, vorzugsweise 2,4-D oder deren Salze oder Ester. Diese Herbizide zeichnen sich insbesondere durch eine hohe Pflanzentoxizität gegenüber non-target Pflanzen in sublethalen Dosen aus.

Bevorzugte Wachstumsregulatoren sind natürliche und synthetische Pflanzenhormone ausgewählt aus der Gruppe bestehend aus Alkoholen, vorzugsweise Decanol, Auxinen, vorzugsweise Indolessigsäure, Cytokininen, vorzugsweise Benzyladenin, Fettsäuren, vorzugsweise Caprylsäure, Gibberelinen, vorzugsweise Gibberelinsäure, Jasmonaten, vorzugsweise Jasmonsäure oder deren Ester, Sesquiterpenen, vorzugsweise Abszissinsäure, und Salicylsäure oder deren Ester.

Insbesonders bevorzugt handelt es sich bei der einen oder den mehreren agrochemischen Substanzen um ein oder mehrere Pestizide ausgewählt aus der Gruppe bestehend aus Aclonifen, Clethodim, 2,4-D oder deren Salze oder Ester, Dicamba oder deren Salze, Dimethoat, Fenpropidin, Fenpropimorph und Spiroxamin. Diese Pestizide weisen eine hohe Flüchtigkeit (Dampfdruck größer als 10⁻⁵ Pa) und eine hohe Toxizität gegenüber Menschen, Nützlingen, Bienen oder nicht-target Pflanzen auf. Bei der Ausbringung dieser Pestizide durch Versprühen stellt deren Drift ein besonderes Problem dar.

Übliche Formulierungsformen für Pflanzenbehandlungsmittel sind beispielsweise wasserlösliche Flüssigkeiten (SL), Emulsionskonzentrate (EC), Emulsionen in Wasser (EW), Suspensionskonzentrate (SC, SE, FS, OD), in Wasser dispergierbare Granulate (WG), Granulate (GR) und Kapselkonzentrate (CS); diese und weitere mögliche Formuliertypen sind beispielsweise durch Crop Life International und in Pesticide Specifications, Manual on development and use of FAO and WHO specifications for pesticides, FAO Plant Production and Protection Papers - 173, prepared by the FAO/WHO Joint Meeting on Pesticide Specifications, 2004, ISBN: 9251048576 beschrieben.

Die Pflanzenbehandlungsmittel können gegebenenfalls die Wirkung verbessernde Adjuvantien enthalten. Ein Adjuvant in diesem Kontext ist eine Komponente, die die biologische Wirkung der Formulierung verbessert, ohne dass die Komponente selbst eine biologische Wirkung hat. Beispiele für Adjuvantien sind Penetrationsförderer, z. B. vegetative Öle wie beispielsweise Rapsöl, Sonnenblumenöl, Mineralöle wie beispielsweise Paraffinöle, Alkylester vegetativer Fettsäuren wie beispielsweise Rapsöl-oder Sojaölmethylester oder Alkanolalkoxylate und/oder Spreitmittel wie beispielsweise Alkylsiloxane und/oder Salze z. B. organische oder anorganische Ammonium- oder Phosphoniumsalze wie beispielsweise Ammoniumsulfat oder Diammoniumhydrogenphosphat und/oder die Retention fördernde Mittel wie z. B. Dioctylsulfo-succinat oder Hydroxypropyl-guar Polymere und/oder Humectants wie z. B. Glycerin und/oder Dünger wie beispielsweise Ammonium-, Kalium- oder phosphorenthaltende Dünger und/oder Mittel, die das Anhaften an der Blattoberfläche fördern.

Gegebenenfalls können die Pflanzenbehandlungsmittel Hilfsstoffe enthalten, vorzugsweise in Kombination mit den oben genannten Adjuvantien. Bei den Hilfsstoffen kann es sich beispielsweise um Streckmittel, Lösemittel, Spontanitätsförderer, Trägerstoffe, Emulgiermittel, Dispergiermittel, Frostschutzmittel, Biozide und/oder Verdicker handeln.

Die Pflanzenbehandlungsmittel werden in bekannter Weise hergestellt, z. B. durch Vermischen der Wirkstoffe mit Hilfsstoffen wie beispielsweise Streckmitteln, Lösemitteln und/oder festen Trägerstoffen und/oder weiteren Hilfsstoffen wie beispielsweise oberflächenaktive Stoffe. Die Herstellung der Pflanzenbehandlungsmittel als Formulierungen erfolgt entweder in geeigneten Anlagen oder auch vor oder während der Anwendung.

Als Hilfsstoffe können solche Stoffe Verwendung finden, die geeignet sind, der Formulierung des Wirkstoffs oder den aus diesen Formulierungen bereiteten Anwendungsformen (wie z. B. gebrauchsfähigen Pflanzenschutzmitteln wie Spritzbrühen oder Saatgutbeizen) besondere Eigenschaften, wie bestimmte physikalische, technische und/oder biologische Eigenschaften zu verleihen.

Als Streckmittel eignen sich z. B. Wasser, polare und unpolare organische chemische Flüssigkeiten, wie bereits weiter oben beschrieben.

Grundsätzlich können alle geeigneten Trägerstoffe eingesetzt werden. Als Trägerstoffe kommen insbesondere infrage: z. B. Ammoniumsalze und natürliche Gesteinsmehle wie Kaoline, Tonerden, Talkum, Kreide, Quarz, Attapulgit, Montmorillonit oder Diatomeenerde und synthetische Gesteinsmehl, wie hochdisperse Kieselsäure, Aluminiumoxid und natürliche oder synthetische Silikate, Harze, Wachse und /oder feste Düngemittel. Mischungen solcher Trägerstoffe können ebenfalls verwendet werden. Als Trägerstoffe für Granulate kommen infrage: z. B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Papier, Kokosnussschalen, Maiskolben und Tabakstängel.

Auch verflüssigte gasförmige Streckmittel oder Lösemittel können eingesetzt werden. Insbesondere eignen sich solche Streckmittel oder Trägerstoffe, welche bei normaler Temperatur und unter Normaldruck gasförmig sind, z. B. Aerosol-Treibgase wie Halogenkohlenwasserstoffe sowie Butan, Propan, Stickstoff und Kohlendioxid.

Beispiele für Emulgier- und/oder schaumerzeugende Mittel, Dispergiermittel oder Benetzungsmittel mit ionischen oder nicht-ionischen Eigenschaften oder Mischungen dieser oberflächenaktiven Stoffe sind Salze von Polyacrylsäure, Salze von Lignosulphonsäure, Salze von Phenolsulphonsäure oder Naphthalinsulphonsäure, Polykondensate von Ethylenoxid mit Fettalkoholen oder mit Fettsäuren oder mit Fettaminen, mit substituierten Phenolen (vorzugsweise Alkylphenole oder Arylphenole), Salze von Sulphobernsteinsäureestern, Taurinderivate (vorzugsweise Alkyltaurate), Phosphorsäureester von polyethoxylierten Alkoholen oder Phenole, Fettsäureester von Polyolen und Derivate der Verbindungen enthaltend Sulphate, Sulphonate und Phosphate, z. B. Alkylarylpolyglycolether, Alkylsulfonate, Alkylsulfate, Arylsulfonate, Eiweißhydrolysate, Lignin-Sulfitablaugen und Methylcellulose. Die Anwesenheit einer oberflächenaktiven Substanz ist vorteilhaft, wenn einer der Wirkstoffe und/oder einer der inerten Trägerstoffe nicht in Wasser löslich ist und wenn die Anwendung in Wasser erfolgt.

Als weitere Hilfsstoffe können in den Formulierungen und den daraus abgeleiteten Anwendungsformen Farbstoffe wie anorganische Pigmente, z. B. Eisenoxid, Titanoxid, Ferrocyanblau und organische Farbstoffe wie Alizarin-, Azo- und Metallphthalocyaninfarbstoffe und Nähr- und Spurennährstoffe wie Salze von Eisen, Mangan, Bor, Kupfer, Kobalt, Molybdän und Zink vorhanden sein.

Weiterhin enthalten sein können Stabilisatoren wie Kältestabilisatoren, Konservierungsmittel, Oxidationsschutzmittel, Lichtschutzmittel oder andere die chemische und / oder physikalische Stabilität verbessernde Mittel. Weiterhin enthalten sein können schaumerzeugende Mittel oder Entschäumer.

Ferner können die Formulierungen und daraus abgeleiteten Anwendungsformen als zusätzliche Hilfsstoffe auch Haftmittel wie Carboxymethylcellulose, natürliche und synthetische pulverige, körnige oder latexförmige Polymere enthalten wie Gummiarabikum, Polyvinylalkohol, Polyvinylacetat sowie natürliche Phospholipide wie Kephaline und Lecithine und synthetische Phospholipide. Weitere Hilfsstoffe können mineralische und vegetabile Öle sein.

Gegebenenfalls können noch weitere Hilfsstoffe in den Formulierungen und den daraus abgeleiteten Anwendungsformen enthalten sein. Solche Zusatzstoffe sind beispielsweise Duftstoffe, schützende Kolloide, Bindemittel, Klebstoffe, Verdicker, thixotrope Stoffe, Penetrationsförderer, Retentionsförderer, Stabilisatoren, Sequestiermittel, Komplexbildner, Humectans, Spreitmittel.

Im Allgemeinen können die agrochemische Substanzen mit jedem festen oder flüssigen Zusatzstoff, welcher für Formulierungszwecke gewöhnlich verwendet wird, kombiniert werden.

Als Retentionsförderer kommen alle diejenigen Substanzen in Betracht, die die dynamische Oberflächenspannung verringern wie beispielsweise Dioctylsulfosuccinat oder die die Visko-Elastizität erhöhen wie beispielsweise Hydroxypropyl-guar Polymere.

Als Penetrationsförderer kommen im vorliegenden Zusammenhang alle diejenigen Substanzen in Betracht, die üblicherweise eingesetzt werden, um das Eindringen agrochemischer Substanzen in Pflanzen zu verbessern.

Penetrationsförderer werden in diesem Zusammenhang dadurch definiert, dass sie aus der (in der Regel wässerigen) Applikationsbrühe und/oder aus dem Spritzbelag in die Kutikula der Pflanze eindringen und dadurch die Stoffbeweglichkeit (Mobilität) der Wirkstoffe in der Kutikula erhöhen können. Die in der Literatur (Baur et al., 1997, Pesticide Science 51, 131 - 152) beschriebene Methode kann zur Bestimmung dieser Eigenschaft eingesetzt werden. Beispielhaft werden genannt Alkoholalkoxylate wie beispielsweise Kokosfettethoxylat (10) oder Isotridecylethoxylat (12), Fettsäureester wie beispielsweise Rapsöl- oder Sojaölmethylester, Fettamine Alkoxylate wie beispielsweise Tallowamine ethoxylat (15) oder Ammonium- und/oder Phosphonium-Salze wie beispielsweise Ammoniumsulfat oder Diammonium-hydrogenphosphat.

Die erfindungsgemäß eingesetzten Pflanzenbehandlungsmittel enthalten bevorzugt zwischen 0,00000001 und 98 Gew.-% an agrochemischen Substanzen oder, besonders bevorzugt zwischen 0,01 und 95 Gew.-% an agrochemischen Substanzen, besonders bevorzugt zwischen 0,5 und 90 Gew.-% an agrochemischen Substanzen, bezogen auf das Gewicht der Pflanzenbehandlungsmittel.

Der Gehalt an agrochemischen Substanzen der aus den Pflanzenbehandlungsmitteln bereiteten Anwendungsformen (Pflanzenschutzmittel) kann in weiten Bereichen variieren. Die Konzentration der agrochemischen Substanzen in den Anwendungsformen, insbesondere in den Spritzbrühen, kann üblicherweise zwischen 0,00000001 und 95 Gew.-% an agrochemischer Substanz, vorzugsweise zwischen 0,00001 und 5 Gew.-% an agrochemischer Substanz, besonders bevorzugt zwischen 0,00001 und 1 Gew.-% an agrochemischer Substanz und insbesondere bevorzugt zwischen 0,001 und 1 Gew.-% an agrochemischer Substanz, bezogen auf das Gewicht der Anwendungsform, insbesondere der Spritzbrühe, liegen. Die Anwendung geschieht in einer den Anwendungsformen angepassten üblichen Weise.

Die Herstellung der Formulierungen erfolgt z. B. in der Weise, dass man die Komponenten in den jeweils gewünschten Verhältnissen miteinander vermischt. Handelt es sich bei der agrochemischen Substanz um eine Festsubstanz, so setzt man diese im Allgemeinen entweder in fein gemahlener Form oder in Form einer Lösung oder Suspension in einem organischen Solvens oder Wasser ein. Ist die agrochemische Substanz flüssig, so erübrigt sich häufig die Verwendung eines organischen Lösungsmittels. Es ist außerdem möglich, eine feste agrochemische Substanz in Form einer Schmelze einzusetzen. Die Temperaturen können bei der Durchführung des Verfahrens in einem bestimmten Bereich variiert werden. Man arbeitet im Allgemeinen bei Temperaturen zwischen 0 °C und 80 °C, vorzugsweise zwischen 10 °C und 60 °C.

Die Herstellung der erfindungsgemäß verwendeten Pflanzenbehandlungsmittel ist je nach Formulierungstyp auf verschiedenen Wegen möglich, welche dem Fachmann hinlänglich bekannt sind. Bei der Herstellung kann man beispielsweise so vorgehen, dass man die Tributylphenolalkoxylate der Formel (I) mit einem oder mehreren agrochemischen Substanzen sowie gegebenenfalls mit Hilfsstoffen vermischt. Die Reihenfolge, in der die Komponenten miteinander vermischt werden, ist beliebig. Bei der Herstellung kommen übliche Geräte in Betracht, die zur Herstellung von agrochemischen Formulierungen eingesetzt werden.

Bei der erfindungsgemäßen Verwendung werden Pflanzenbehandlungsmittel in Form von Spritzbrühen ausgebracht. Dabei wird eine Spritzbrühe bevorzugt durch Verdünnung einer Konzentrat-Formulierung, mit einer definierten Menge Wasser hergestellt.

Weiterhin Gegenstand der Erfindung ist ein Verfahren zur Verminderung der Drift bei der Applikation von Pflanzenbehandlungsmitteln, wobei eine vorzugsweise wässrige Spritzbrühe auf die zu behandelnden Pflanzen oder deren Ort aufgesprüht wird, die agrochemische Substanzen enthaltende Spritzbrühe einen oder mehrere Tributylphenolalkoxylate der Formel (I) enthält und die Menge des einen oder der mehreren Tributylphenolalkoxylaten der Formel (I) in der Spritzbrühe vorzugsweise von 0,001 bis 5 Gew.-%, besonders bevorzugt von 0,005 bis 3 Gew.-%, insbesondere bevorzugt von 0,01 bis 1 Gew.-% und außerordentlich bevorzugt von 0,03 bis 0,5 Gew.-% beträgt, jeweils bezogen auf das Gesamtgewicht der Spritzbrühe.

Weiterhin beschrieben sind Mittel zur Driftreduzierung bei der Applikation von Pflanzenbehandlungsmitteln enthaltend einen oder mehrere der oben beschriebenen Tributylphenolalkoxylate der Formel (I) und vorzugsweise Spritzbrühen enthaltend einen oder mehrere der oben beschriebenen Tributylphenolalkoxylate der Formel (I), wobei die Menge des einen oder der mehreren Tributylphenolalkoxylate der Formel (I) in der Spritzbrühe vorzugsweise von 0,001 bis 5 Gew.-%, besonders bevorzugt von 0,005 bis 3 Gew.-%, insbesondere bevorzugt von 0,01 bis 1 Gew.-% und außerordentlich bevorzugt von 0,03 bis 0,5 Gew.-% beträgt, jeweils bezogen auf das Gesamtgewicht der Spritzbrühe.

### Beispiele

Im Folgenden wird die Erfindung anhand von Beispielen verdeutlicht.

Bei den im Folgenden angegebenen Prozentangaben handelt es sich um Gewichtsprozent (Gew.-%) sofern nicht explizit anders angegeben.

Bei den eingesetzten Rohstoffen handelt es sich um:

| | |
|---|---|
| Sapogenat® T 060 | Tributylphenolethoxylat, Firma Clariant |
| Sapogenat® T 080 | Tributylphenolethoxylat, Firma Clariant |
| Hostaphat® 1306 | Phosphorsäureester, Firma Clariant |
| Genapol® EP 0244 | Alkoholalkoxylat, Firma Clariant |
| Synergen® OS | Anti-drift Adjuvant der Firma Clariant, basierend auf einem Gemisch aus Polyglycerinester und Rapsölmethylester |
| Sterling Blue® | Herbizidformulierung des Diglykolamin (DGA) Salzes von Dicamba (480 g/l acid equivalent; a.e.), Firma Winfield |
| Kalium Glyphosat | Herbizidformulierung des Kalium (K) Salzes von Glyphosat (680 g/l acid equivalent; a.e.), Firma Monsanto |
| Dicamba | Dicamba Säure, Firma Schirm |
| Diglycolamin (DGA) | 2-(2-Aminoethoxy)-ethanol, Firma Alfa Aesar |
| BAPMA | N,N-Bis-(3-aminopropyl)methylamin, Firma Aldrich |

### Herstellungsbeispiele

### A) Herstellung von 2,4,6-Tri-sec-butylphenolethoxylat-methylethern und Formulierungen

A1) Herstellung von 2,4,6-Tributylphenoxy-ethoxy(6)-methylether (TBPEM-6) 563 g Sapogenat® T 060 (Tributylphenolethoxylat(6)) (Clariant) wurden unter Stickstoffatmosphäre auf 60 °C temperiert und mit 60 g fester NaOH versetzt. Danach wurde evakuiert und über einen Zeitraum von 3 h 75,7 g MeCl eindosiert, wobei es zu einer leichten Erwärmung um ca. 5 °C kam. Nach erfolgter Zugabe wurde mindestens 3 h bei 80 °C gerührt, danach Reaktionswasser und überschüssiges MeCl durch langsame Druckreduktion entfernt.

Je nach Umsatzgrad war das beschriebene Prozedere zu wiederholen.

Nach Erreichen des geforderten Umsatzes wurde Wasser zugegeben und mindestens 1h bei 80 °C gerührt, nachfolgend wurde der Ansatz zur Phasentrennung stehen gelassen. Die organische Phase wurde mit Phosphorsäure über einen Zeitraum von 30 min neutralisiert, entwässert und über Celite filtriert. Die Ausbeute an TBPEM-6 betrug 577 g.

Analog wurde das methylveretherte Tributylphenolalkoxylat TBPEM-8 aus dem mit acht Mol Ethylenoxid ethoxylierten Sapogenat T 080 erhalten.

### A2) Herstellung einer Adjuvant-Zusammensetzung enthaltend TBPEM (TBPEM-Blend)

54 g TBPEM-6, 18g Genapol® EP 0244, 20g Hostaphat® 1306 und 1,2 Propylenglykol werden gemischt und mit einem Rührer homogenisiert. Es entsteht eine klare, lagerstabile Lösung.

### A3) Herstellung von Dicamba DGA Formulierungen (480 g/l a.e.) mit eingebauten Testsubstanzen (built-in)

Dicamba Säure und Diglykolamin (DGA) werden in Wasser gerührt bis eine klare Lösung entsteht. Anschließend wird die Testsubstanz zugegeben und mit einem Rührer homogenisiert. Es entseht eine klare, lagerstabile Lösung. Die Zusammensetzungen der Dicamba Formulierungen sind in Tabelle 1 aufgeführt.

**Tabelle 1**

| Zusammensetzung | Testubstanz | Menge Testsubstanz [Gew.-%] | Menge Dicamba [Gew.-%] | Menge Diglykolamin [Gew.-%] | Menge Wasser [Gew.-%] |
|---|---|---|---|---|---|
| DGA-1* | - | - | 39,1 | 18,6 | 42,3 |
| DGA-2 | TBPEM-6 | 10,0 | 39,1 | 18,6 | 32,3 |
| DGA-3 | TBPEM-6 | 20,0 | 39,1 | 18,6 | 22,3 |
| DGA-4 | TBPEM-8 | 10,0 | 39,1 | 18,6 | 32,3 |
| DGA-5 | TBPEM-8 | 20,0 | 39,1 | 18,6 | 22,3 |
| DGA-6 | TBPEM-Blend | 10,0 | 39,1 | 18,6 | 32,3 |
| DGA-7 | TBPEM-Blend | 20,0 | 39,1 | 18,6 | 22,3 |
| DGA-8 | Sapogenat® T 060 | 10,0 | 39,1 | 18,6 | 32,3 |
| DGA-9 | Sapogenat® T 060 | 20,0 | 39,1 | 18,6 | 22,3 |
| DGA-10 | Sapogenat® T 080 | 10,0 | 39,1 | 18,6 | 32,3 |
| DGA-11 | Sapogenat® T 080 | 20,0 | 39,1 | 18,6 | 22,3 |

| | | | | | |
|---|---|---|---|---|---|
| *Referenz | | | | | |

### A4) Herstellung von Dicamba BAPMA Formulierungen (480 g/l a.e.) mit eingebauten Testsubstanzen (built-in)

Dicamba Säure und BAPMA (N,N-Bis-(3-aminopropyl)methylamin) werden in Wasser gerührt bis eine klare Lösung entsteht. Anschließend wird die Testsubstanz zugegeben und mit einem Rührer homogenisiert. Es entseht eine klare, lagerstabile Lösung. Die Zusammensetzungen der Dicamba BAPMA Formulierungen sind in Tabelle 2 aufgeführt.

**Tabelle 2**

| Zusammensetzung | Testsubstanz | Menge Testsubstanz [Gew.-%] | Menge Dicamba [Gew.-%] | Menge BAPMA [Gew.-%] | Menge Wasser [Gew.-%] |
|---|---|---|---|---|---|
| BAPMA-1 * | - | - | 39,6 | 13,3 | 47,1 |
| BAPMA-2 | TBPEM-6 | 20,0 | 38,3 | 9,6 | 32,1 |
| BAPMA-3 | TBPEM-8 | 20,0 | 38,3 | 9,6 | 32,1 |
| BAPMA-4 | TBPEM-Blend | 20,0 | 38,3 | 9,6 | 32,1 |
| BAPMA-5 | Sapogenat® T 060 | 20,0 | 38,3 | 9,6 | 32,1 |
| BAPMA-6 | Sapogenat® T 080 | 20,0 | 38,3 | 9,6 | 32,1 |

| | | | | | |
|---|---|---|---|---|---|
| *Referenz | | | | | |

### B) Herstellung der verwendeten Spritzbrühen

### B1) Beispiele für wässrige Spritzbrühen

Im Folgenden wird die Zusammensetzung der Spritzbrühen A1 - A12 angegeben. Die Spritzbrühen wurden durch Mischen der veretherten Tributylphenolalkoxylaten bzw. Zusammensetzungen enthaltend veretherte Tributylphenolalkoxylate mit Wasser hergestellt.

**Tabelle 3**

| Spritzbrühe | Testsubstanz | Menge Testsubstanz [Gew.-%] |
|---|---|---|
| A1* | Synergen® OS | 0,50 |
| A2 | TBPEM-6 | 0,03 |
| A3 | TBPEM-6 | 0,08 |
| A4 | TBPEM-6 | 0,15 |
| A5 | TBPEM-8 | 0,03 |
| A6 | TBPEM-8 | 0,08 |
| A7 | TBPEM-8 | 0,15 |
| A8 | TBPEM-Blend | 0,05 |
| A9 | TBPEM-Blend | 0,10 |
| A10 | TBPEM-Blend | 0,20 |
| A11 | Sapogenat® T 060 | 0,15 |
| A12 | Sapogenat® T 080 | 0,15 |

| | | |
|---|---|---|
| *Referenz | | |

### B2) Beispiele für Spritzbrühen mit kommerzieller Dicamba DGA Formulierung

Im Folgenden wird die Zusammensetzung der Spritzbrühen B1 - B7 angegeben. Diese Spritzbrühen werden durch Mischen von Sterling Blue® der Firma Winfield (wässrige SL-Formulierung des Diglykolamin (DGA) Salzes von Dicamba 480 g/l a.e.), Wasser und der Testsubstanz hergestellt.

**Tabelle 4**

| Spritzbrühe | Menge Sterling Blue® [Gew.-%] | Testsubstanz | Menge Testsubstanz [Gew.-%] |
|---|---|---|---|
| B1* | 0,5 | - | - |
| B2* | 0,5 | Synergen® OS | 0,25 |
| B3 | 0,5 | TBPEM-Blend | 0,25 |
| B4 | 0,5 | TBPEM-6 | 0,15 |
| B5 | 0,5 | TBPEM-8 | 0,15 |
| B6 | 0,5 | Sapogenat® T 060 | 0,15 |
| B7 | 0,5 | Sapogenat® T 080 | 0,15 |

| | | | |
|---|---|---|---|
| *Referenz | | | |

### B3) Beispiele für Spritzbrühen mit kommerzieller Dicamba DGA Formulierung und Kalium Glyphosat Formulierung

Im Folgenden wird die Zusammensetzung der Spritzbrühen C1- C7 angegeben. Diese Spritzbrühen werden durch Mischen von Sterling Blue® der Firma Winfield (wässrige SL-Formulierung des Diglykolamin (DGA) Salzes von Dicamba 480 g/l a.e.), einer wässrige SL-Formulierung des Kalium (K) Salzes von Glyphosat 680 g/l a.e., der Testsubstanz und Waser hergestellt.

**Tabelle 5**

| Spritzbrühe | Menge Sterling Blue® [Gew.-%] | Menge K-Glyphosat [Gew.-%] | Testsubstanz | Menge Testsubstanz [Gew.-%] |
|---|---|---|---|---|
| C1* | 0,5 | 2,25 | - | - |
| C2* | 0,5 | 2,25 | Synergen® OS | 0,25 |
| C3 | 0,5 | 2,25 | TBPEM-6 | 0,15 |
| C4 | 0,5 | 2,25 | TBPEM-8 | 0,15 |
| C5 | 0,5 | 2,25 | TBPEM-Blend | 0,15 |
| C6 | 0,5 | 2,25 | Sapogenat® T 060 | 0,15 |
| C7 | 0,5 | 2,25 | Sapogenat® T 080 | 0,15 |

| | | | | |
|---|---|---|---|---|
| *Referenz | | | | |

### B4) Beispiele für Spritzbrühen mit Dicamba DGA Formulierungen mit eingebauten Testsubstanzen

Im Folgenden wird die Zusammensetzung der Spritzbrühen D1 - D11 angegeben. Diese Spritzbrühen werden durch Mischen von Dicamba Formulierungen aus Tabelle 1 (wässrige SL-Formulierung des Diglykolamin (DGA) Salzes von Dicamba 480 g/l a.e. mit eingebauter Testsubstanz) und Wasser hergestellt.

**Tabelle 6**

| Spritzbrühe | Dicamba Formulierung | Menge Dicamba Formulierung [Gew.-%] | Testsubstanz (built-in) |
|---|---|---|---|
| D1* | DGA-1 | 0,75 | - |
| D2 | DGA-2 | 0,5 | TBPEM-6 |
| D3 | DGA-3 | 0,75 | TBPEM-6 |
| D4 | DGA-4 | 0,5 | TBPEM-8 |
| D5 | DGA-5 | 0,75 | TBPEM-8 |
| D6 | DGA-6 | 0,5 | TBPEM-Blend |
| D7 | DGA-7 | 0,75 | TBPEM-Blend |
| D8 | DGA-8 | 0,5 | Sapogenat® T 060 |
| D9 | DGA-9 | 0,75 | Sapogenat® T 060 |
| D10 | DGA-10 | 0,5 | Sapogenat® T 080 |
| D11 | DGA-11 | 0,75 | Sapogenat® T 080 |

| | | | |
|---|---|---|---|
| *Referenz | | | |

### B5) Beispiele für Spritzbrühen mit Dicamba Formulierungen mit eingebauten Testsubstanzen und einer K-Glyphosat Formulierung

Im Folgenden wird die Zusammensetzung der Spritzbrühen E1 - E11 angegeben. Diese Spritzbrühen werden durch Mischen von Dicamba Formulierungen aus Tabelle 1 (wässrige SL-Formulierung des Diglykolamin (DGA) Salzes von Dicamba 480 g/l a.e. mit eingebauter Testsubstanz), einer wässrige SL-Formulierung des Kalium (K) Salzes von Glyphosat 680 g/l a.e. und Wasser hergestellt.

**Tabelle 7**

| Spritzbrühe | Dicamba Formulierung | Menge Dicamba Formulierung [Gew.-%] | Testsubstanz (built-in) | Menge K-Glyphosat [Gew.-%] |
|---|---|---|---|---|
| E1 | DGA-2 | 0,5 | TBPEM-6 | 2,25 |
| E2 | DGA-3 | 0,75 | TBPEM-6 | 2,25 |
| E3 | DGA-4 | 0,5 | TBPEM-8 | 2,25 |
| E4 | DGA-5 | 0,75 | TBPEM-8 | 2,25 |
| E5 | DGA-6 | 0,5 | TBPEM-Blend | 2,25 |
| E6 | DGA-7 | 0,75 | TBPEM-Blend | 2,25 |
| E7 | DGA-8 | 0,5 | Sapogenat® T 060 | 2,25 |
| E8 | DGA-9 | 0,75 | Sapogenat® T 060 | 2,25 |
| E9 | DGA-10 | 0,5 | Sapogenat® T 080 | 2,25 |
| E10 | DGA-11 | 0,75 | Sapogenat® T 080 | 2,25 |

### B6) Beispiele für Spritzbrühen mit Dicamba BAPMA Formulierung

Im Folgenden wird die Zusammensetzung der Spritzbrühen F1- F6 angegeben. Diese Spritzbrühen werden durch Mischen einer wässrigen SL-Formulierung des BAPMA Salzes von Dicamba 480 g/l a.e. (siehe Zusammensetzung BAPMA-1 in Tabelle 2), der Testsubstanz und Waser hergestellt.

**Tabelle 8**

| Spritzbrühe | Dicamba (BAPMA-1) [Gew.-%] | Testsubstanz | Menge Testsubstanz [Gew.-%] |
|---|---|---|---|
| F1* | 0,75 | - | - |
| F2 | 0,75 | TBPEM-6 | 0,15 |
| F3 | 0,75 | TBPEM-8 | 0,15 |
| F4 | 0,75 | TBPEM-Blend | 0,15 |
| F5 | 0,75 | Sapogenat® T 060 | 0,15 |
| F6 | 0,75 | Sapogenat® T 080 | 0,15 |

| | | | |
|---|---|---|---|
| *Referenz | | | |

### B7) Beispiele für Spritzbrühen mit Dicamba BAPMA Formulierungen mit eingebauten Testsubstanzen

Im Folgenden wird die Zusammensetzung der Spritzbrühen G1 - G6 angegeben. Diese Spritzbrühen werden durch Mischen von Dicamba Formulierungen aus Tabelle 2 (wässrige SL-Formulierung des BAPMA Salzes von Dicamba 480 g/l a.e. mit eingebauter Testsubstanz) und Wasser hergestellt.

**Tabelle 9**

| Spritzbrühe | Dicamba Formulierung | Menge Dicamba Formulierung [Gew.-%] | Testsubstanz (built-in) |
|---|---|---|---|
| G1* | BAPMA-1 | 0,75 | - |
| G2 | BAPMA-2 | 0,75 | TBPEM-6 |
| G3 | BAPMA-3 | 0,75 | TBPEM-8 |
| G4 | BAPMA-4 | 0,75 | TBPEM-Blend |
| G5 | BAPMA-5 | 0,75 | Sapogenat® T 060 |
| G6 | BAPMA-6 | 0,75 | Sapogenat® T 080 |

| | | | |
|---|---|---|---|
| *Referenz | | | |

### B8) Beispiele für Spritzbrühen mit Dicamba BAPMA Formulierungen mit eingebauten Testsubstanzen und einer K-Glyphosat Formulierung

Im Folgenden wird die Zusammensetzung der Spritzbrühen H1 - H6 angegeben. Diese Spritzbrühen werden durch Mischen von Dicamba Formulierungen aus Tabelle 2 (wässrige SL-Formulierung des BAPMA Salzes von Dicamba 480 g/l a.e. mit eingebauter Testsubstanz), einer wässrige SL-Formulierung des Kalium (K) Salzes von Glyphosat 680 g/l a.e. und Wasser hergestellt.

**Tabelle 10**

| Spritzbrühe | Dicamba Formulierung | Menge Dicamba Formulierung [Gew.-%] | Testubstanz (built-in) | Menge K-Glyphosat [Gew.-%] |
|---|---|---|---|---|
| H1 | BAPMA-1 | 0,75 | - | 2,25 |
| H2 | BAPMA-2 | 0,75 | TBPEM-6 | 2,25 |
| H3 | BAPMA-3 | 0,75 | TBPEM-8 | 2,25 |
| H4 | BAPMA-4 | 0,75 | TBPEM-Blend | 2,25 |
| H5 | BAPMA-5 | 0,75 | Sapogenat® T 060 | 2,25 |
| H6 | BAPMA-6 | 0,75 | Sapogenat® T 080 | 2,25 |

### C) Anwendungsbeispiele

### C1) Messung der Tropfengrößenverteilung

Ein Malvern Spraytec "real-time spray sizing system" wurde zur Bestimmung der Tropfengrößenverteilung verwendet. Dazu wurde das System (STP5321, Malvern Instruments GmbH, Heidelberg, Germany) in einer eigens konstruierten Spritzkabine montiert mit der Option, praxisübliche Spritzapplikationen bei frei einstellbarem Druck für diverse hydraulische Düsen und frei einstellbaren Abständen (Düse-Zieloberfläche) wählen zu können. Die Spritzkabine ist verdunkelbar und alle Störparameter können ausgeschaltet werden Für die Messungen wurde die Standardflachstrahldüse XR11002 (Teejet) mit hohem Anteil an feinen Tropfen (< 105 µm) im Tropfenspektrum und die Injektordüsen ID(3)12002 (Lechler) mit gröberen Tropfengrößen verwendet. Der eingestellte Druck wurde variiert und ein mittlerer Druck von 3 bar wurde für die nachfolgend berichteten Messungen konstant gehalten. Temperatur und relative Luftfeuchte variierten zwischen 21,5 und 29 °C bzw. 33 % und 56 %. In jeder Versuchsreihe wurde stets Leitungswasser als interner Standard gemessen und eine Spritzbrühe mit dem Anti-drift adjuvant Synergen® OS (Spritzbrühe A1 in Tabelle 1 und Spritzbrühe B2 in Tabelle 2) als kommerziell erhältlichem Standard.

Die Spraytec Messung wurde bei der Einstellung von 1kHz vorgenommen, nachdem sich Messungen bei 2,5kHz oder höher wie auch andere Einflussgrößen wie zusätzliche Absaugung als vernachlässigbar erwiesen. Die Messung im Sprühnebel wurde konstant gehalten bei einer Position mit Abständen von genau 29,3 cm zur Düse und 0,4 cm vom Lot unter Düse. Die Messungen erfolgten innerhalb von 5 Sekunden und berichtet wird das Mittel von 6 Wiederholungen als Volumenanteil der Tropfen mit Durchmesser < 90 µm ("Vol 90"), < 105 µm ("Vol 105") und < 150 µm ("Vol 150") (prozentualer Standardfehler 0,5 - 2,5 %). Als weiterer Messparameter wurde der Volumenanteil der Tropfen mit Durchmesser < 210 µm bestimmt ("Vol 210") und ins Verhältnis zum Volumenanteil der Tropfen mit Durchmesser < 105 µm gesetzt ("Vol 210 / Vol 105"). Des Weiteren wurde die prozentuale Reduktion des Volumenanteils der Tropfen mit Durchmesser < 105 µm bei Verwendung von Spritzbrühen enthaltend die Testsubstanzen im Vergleich zur Verwendung von Leitungswasser als internem Standard errechnet ("Red 105").

### C2) Anwendungsbeispiel

Tropfengrößenverteilung für Injektordüse ID(3)12002 (bei 3bar) unter Verwendung der Spritzbrühen A1 - A12 (Zusammensetzung siehe Tabelle 3).

**Tabelle 11**

| Sprühflüssigkeit | Testsubstanz | Vol 90 [Vol.-%] | Vol 105 [Vol.-%] | Vol 150 [Vol.-%] | Vol 210/ Vol 105 | Red 105 [%] |
|---|---|---|---|---|---|---|
| Wasser | Wasser | 1,73 | 2,71 | 6,00 | 3,89 | - |
| A1 (Referenz) | Synergen® OS | 0,98 | 1,48 | 2,73 | 3,04 | 49 |
| A2 (Erfindung) | TBPEM-6 | 0,96 | 1,49 | 2,79 | 2,80 | 45 |
| A3 (Erfindung) | TBPEM-6 | 1,19 | 1,80 | 3,34 | 2,93 | 34 |
| A4 (Erfindung) | TBPEM-6 | 1,47 | 2,20 | 4,14 | 3,18 | 19 |
| A5 (Erfindung) | TBPEM-8 | 0,95 | 1,47 | 2,76 | 2,80 | 48 |
| A6 (Erfindung) | TBPEM-8 | 0,89 | 1,36 | 2,55 | 3,07 | 52 |
| A7 (Erfindung) | TBPEM-8 | 0,95 | 1,45 | 2,76 | 3,22 | 49 |
| A8 (Erfindung) | TBPEM-Blend | 0,78 | 1,20 | 2,15 | 2,66 | 56 |
| A9 (Erfindung) | TBPEM-Blend | 0,77 | 1,20 | 2,32 | 2,96 | 56 |
| A10 (Erfindung) | TBPEM-Blend | 0,80 | 1,23 | 2,43 | 3,44 | 55 |
| A11 (Erfindung) | Sapogenat® T 060 | 0,80 | 1,26 | 2,54 | 3,49 | 46 |
| A12 (Erfindung) | Sapogenat® T 080 | 0,86 | 1,34 | 2,61 | 3,40 | 53 |

### C3) Anwendungsbeispiel

Tropfengrößenverteilung für Flachstrahldüse TeeJet XR11002 (bei 3bar) unter Verwendung der Spritzbrühen A1 - A12 (Zusammensetzung siehe Tabelle 3).

**Tabelle 12**

| Sprühflüssigkeit | Testsubstanz | Vol 90 [Vol.-%] | Vol 105 [Vol.-%] | Vol 150 [Vol.-%] | Vol 210 / Vol 105 | Red 105 [%] |
|---|---|---|---|---|---|---|
| Wasser | Wasser | 24,72 | 34,47 | 60,00 | 2,34 | - |
| A1 (Referenz) | Synergen® OS | 11,08 | 16,20 | 34,62 | 3,62 | 49 |
| A2 (Erfindung) | TBPEM-6 | 11,87 | 17,75 | 37,71 | 3,48 | 49 |
| A3 (Erfindung) | TBPEM-6 | 11,40 | 17,03 | 36,62 | 3,57 | 51 |
| A4 (Erfindung) | TBPEM-6 | 11,21 | 16,66 | 35,96 | 3,62 | 53 |
| A5 (Erfindung) | TBPEM-8 | 10,98 | 16,19 | 34,70 | 3,71 | 56 |
| A6 (Erfindung) | TBPEM-8 | 10,52 | 15,18 | 32,55 | 3,74 | 55 |
| A7 (Erfindung) | TBPEM-8 | 10,72 | 15,38 | 33,07 | 3,22 | 49 |
| A8 (Erfindung) | TBPEM-Blend | 15,28 | 22,60 | 45,03 | 3,02 | 34 |
| A9 (Erfindung) | TBPEM-Blend | 11,93 | 17,65 | 37,06 | 3,43 | 49 |
| A10 (Erfindung) | TBPEM-Blend | 11,04 | 16,06 | 33,87 | 3,56 | 53 |
| A11 (Erfindung) | Sapogenat® T 060 | 11,17 | 16,58 | 35,63 | 3,60 | 52 |
| A12 (Erfindung) | Sapogenat® T 080 | 10,63 | 15,48 | 33,49 | 3,73 | 55 |

### C4) Anwendungsbeispiel

Tropfengrößenverteilung für Injektordüse ID(3)12002 (bei 3bar) unter Verwendung der Spritzbrühen B1 - B7 (Zusammensetzung siehe Tabelle 4).

**Tabelle 13**

| Sprühflüssigkeit | Testsubstanz | Vol 90 [Vol.-%] | Vol 105 [Vol.-%] | Vol 150 [Vol.-%] | Vol 210 / Vol 105 | Red 105 [%] |
|---|---|---|---|---|---|---|
| Wasser | - | 1,79 | 2,83 | 6,39 | 3,97 | - |
| B1 (Referenz) | - | 3,44 | 4,79 | 9,02 | 3,22 | -69 (Erhöhung) |
| B2 (Referenz) | Synergen® OS | 0,82 | 1,24 | 2,22 | 3,49 | 56 |
| B3 (Erfindung) | TBPEM-Blend | 0,70 | 1,10 | 2,21 | 3,81 | 61 |
| B4 (Erfindung) | TBPEM-6 | 1,48 | 2,24 | 4,30 | 3,17 | 22 |
| B5 (Erfindung) | TBPEM-8 | 0,92 | 1,41 | 2,68 | 3,13 | 51 |
| B6 (Erfindung) | Sapogenat® T 060 | 2,63 | 3,67 | 6,87 | 3,09 | 50 |
| B7 (Erfindung) | Sapogenat® T 080 | 0,94 | 1,43 | 2,72 | 3,15 | 54 |

### C5) Anwendungsbeispiel

Tropfengrößenverteilung für Flachstrahldüse TeeJet XR11002 (bei 3bar) unter Verwendung der Spritzbrühen B1 - B7 (Zusammensetzung siehe Tabelle 4).

**Tabelle 14**

| Sprühflüssigkeit | Testsubstanz | Vol 90 [Vol.-%] | Vol 105 [Vol.-%] | Vol 150 [Vol.-%] | Vol 210 / Vol 105 | Red 105 [%] |
|---|---|---|---|---|---|---|
| Wasser | - | 24,66 | 34,49 | 60,58 | 2,36 | - |
| B1 (Referenz) | - | 23,80 | 33,26 | 58,52 | 2,39 | 4 |
| B2 (Referenz) | Synergen® OS | 10,91 | 16,00 | 34,34 | 3,65 | 55 |
| B3 (Erfindung) | TBPEM-Blend | 12,31 | 18,21 | 37,98 | 3,38 | 49 |
| B4 (Erfindung) | TBPEM-6 | 11,63 | 17,38 | 37,40 | 3,56 | 51 |
| B5 (Erfindung) | TBPEM-8 | 10,95 | 15,59 | 32,99 | 3,66 | 55 |
| B6 (Erfindung) | Sapogenat® T 060 | 11,52 | 16,97 | 36,04 | 3,53 | 51 |
| B7 (Erfindung) | Sapogenat® T 080 | 11,01 | 15,91 | 33,92 | 3,65 | 54 |

### C6) Anwendungsbeispiel

Tropfengrößenverteilung für Injektordüse ID(3)12002 (bei 3bar) unter Verwendung der Spritzbrühen C1 - C7 (Zusammensetzung siehe Tabelle 5).

**Tabelle 15**

| Sprühflüssigkeit | Testsubstanz | Vol 90 [Vol.-%] | Vol 105 [Vol.-%] | Vol 150 [Vol.-%] | Vol 210 / Vol 105 | Red 105 [%] |
|---|---|---|---|---|---|---|
| Wasser | - | 1,85 | 2,94 | 6,62 | 3,99 | - |
| C1 (Referenz) | - | 3,02 | 4,17 | 7,99 | 3,42 | -42 (Erhöhung) |
| C2 (Referenz) | Synergen® OS | 0,99 | 1,47 | 2,80 | 3,59 | 50 |
| C3 (Erfindung) | TBPEM-6 | 1,19 | 1,79 | 3,43 | 3,39 | 39 |
| C4 (Erfindung) | TBPEM-8 | 0,97 | 1,47 | 2,80 | 3,33 | 50 |
| C5 (Erfindung) | TBPEM-Blend | 0,83 | 1,30 | 2,84 | 4,37 | 55 |
| C6 (Erfindung) | Sapogenat® T 060 | 0,82 | 1,27 | 2,50 | 3,42 | 57 |
| C7 (Erfindung) | Sapogenat® T 080 | 0,93 | 1,41 | 2,73 | 4,75 | 52 |

### C7) Anwendungsbeispiel

Tropfengrößenverteilung für Flachstrahldüse TeeJet XR11002 (bei 3bar) unter Verwendung der Spritzbrühen C1 - C7 (Zusammensetzung siehe Tabelle 5).

**Tabelle 16**

| Sprühflüssigkeit | Testsubstanz | Vol 90 [Vol.-%] | Vol 105 [Vol.-%] | Vol 150 [Vol.-%] | Vol 210 / Vol 105 | Red 105 [%] |
|---|---|---|---|---|---|---|
| Wasser | - | 25,74 | 35,83 | 62,10 | 2,31 | - |
| C1 (Referenz) | - | 24,39 | 34,06 | 59,46 | 2,35 | 2 |
| C2 (Referenz) | Synergen® OS | 10,86 | 15,74 | 33,57 | 3,65 | 55 |
| C3 (Erfindung) | TBPEM-6 | 11,25 | 16,64 | 35,61 | 3,58 | 52 |
| C4 (Erfindung) | TBPEM-8 | 10,39 | 14,85 | 32,06 | 3,80 | 59 |
| C5 (Erfindung) | TBPEM-Blend | 11,81 | 17,62 | 37,56 | 3,50 | 50 |
| C6 (Erfindung) | Sapogenat® T 060 | 10,79 | 16,07 | 34,86 | 3,66 | 54 |
| C7 (Erfindung) | Sapogenat® T 080 | 10,58 | 15,31 | 33,18 | 3,77 | 57 |

### C8) Anwendungsbeispiel

Tropfengrößenverteilung für Injektordüse ID(3)12002 (bei 3bar) unter Verwendung der Spritzbrühen D1 - D11 (Zusammensetzung siehe Tabelle 6).

**Tabelle 17**

| Sprühflüssigkeit | Testsubstanz | Vol 90 [Vol.-%] | Vol 105 [Vol.-%] | Vol 150 [Vol.-%] | Vol 210 / Vol 105 | Red 105 [%] |
|---|---|---|---|---|---|---|
| Wasser | Wasser | 1,80 | 2,85 | 6,39 | 3,98 | - |
| D1 (Referenz) | - | 2,30 | 3,26 | 6,60 | 3,80 | -15 (Erhöhung) |
| D2 (Erfindung) | TBPEM-6 | 1,03 | 1,59 | 3,03 | 3,01 | 44 |
| D3 (Erfindung) | TBPEM-6 | 1,44 | 2,16 | 4,07 | 3,18 | 24 |
| D4 (Erfindung) | TBPEM-8 | 0,82 | 1,30 | 2,68 | 4,48 | 54 |
| D5 (Erfindung) | TBPEM-8 | 0,85 | 1,35 | 2,83 | 5,11 | 53 |
| D6 (Erfindung) | TBPEM-Blend | 0,81 | 1,33 | 2,90 | 3,72 | 53 |
| D7 (Erfindung) | TBPEM-Blend | 0,76 | 1,22 | 2,61 | 3,76 | 57 |
| D8 (Erfindung) | Sapogenat® T 060 | 0,94 | 1,45 | 2,76 | 2,96 | 49 |
| D9 (Erfindung) | Sapogenat® T 060 | 0,86 | 1,39 | 2,86 | 3,36 | 51 |
| D10 (Erfindung) | Sapogenat® T 080 | 0,96 | 1,48 | 2,90 | 3,15 | 48 |
| D11 (Erfindung) | Sapogenat® T 080 | 0,91 | 1,43 | 2,93 | 3,54 | 49 |

### C9) Anwendungsbeispiel

Tropfengrößenverteilung für Flachstrahldüse TeeJet XR11002 (bei 3bar) unter Verwendung der Spritzbrühen D1 - D11 (Zusammensetzung siehe Tabelle 6).

**Tabelle 18**

| Sprühflüssigkeit | Testsubstanz | Vol 90 [Vol.-%] | Vol 105 [Vol.-%] | Vol 150 [Vol.-%] | Vol 210 / Vol 105 | Red 105 [%] |
|---|---|---|---|---|---|---|
| Wasser | Wasser | 24,66 | 34,49 | 60,58 | 2,36 | - |
| D1 (Referenz) | - | 23,79 | 33,32 | 58,85 | 2,40 | 3 |
| D2 (Erfindung) | TBPEM-6 | 11,59 | 17,17 | 36,37 | 3,01 | 50 |
| D3 (Erfindung) | TBPEM-6 | 10,94 | 15,92 | 34,26 | 3,18 | 54 |
| D4 (Erfindung) | TBPEM-8 | 19,63 | 28,52 | 53,43 | 2,66 | 20 |
| D5 (Erfindung) | TBPEM-8 | 16,32 | 24,10 | 47,53 | 2,94 | 32 |
| D6 (Erfindung) | TBPEM-Blend | 19,17 | 27,57 | 51,38 | 2,66 | 20 |
| D7 (Erfindung) | TBPEM-Blend | 18,78 | 27,01 | 50,57 | 2,69 | 22 |
| D8 (Erfindung) | Sapogenat® T 060 | 15,26 | 22,45 | 44,57 | 3,02 | 35 |
| D9 (Erfindung) | Sapogenat® T 060 | 14,98 | 22,07 | 44,13 | 3,06 | 36 |
| D10 (Erfindung) | Sapogenat® T 080 | 16,73 | 24,73 | 48,48 | 2,90 | 31 |
| D11 (Erfindung) | Sapogenat® T 080 | 15,92 | 23,45 | 46,44 | 2,99 | 35 |

### C10) Anwendungsbeispiel

Tropfengrößenverteilung für Injektordüse ID(3)12002 (bei 3bar) unter Verwendung der Spritzbrühen E1 - E11 (Zusammensetzung siehe Tabelle 7).

**Tabelle 19**

| Sprühflüssigkeit | Testsubstanz | Vol 90 [Vol.-%] | Vol 105 [Vol.-%] | Vol 150 [Vol.-%] | Vol 210 / Vol 105 | Red 105 [%] |
|---|---|---|---|---|---|---|
| Wasser | Wasser | 1,85 | 2,94 | 6,62 | 3,99 | - |
| E1 (Erfindung) | TBPEM-6 | 1,00 | 1,54 | 2,90 | 3,06 | 48 |
| E2 (Erfindung) | TBPEM-6 | 1,21 | 1,82 | 3,54 | 3,40 | 38 |
| E3 (Erfindung) | TBPEM-8 | 0,79 | 1,26 | 2,63 | 3,74 | 57 |
| E4 (Erfindung) | TBPEM-8 | 0,77 | 1,22 | 2,75 | 4,54 | 58 |
| E5 (Erfindung) | TBPEM-Blend | 0,82 | 1,33 | 3,04 | 4,58 | 55 |
| E6 (Erfindung) | TBPEM-Blend | 1,50 | 2,20 | 4,63 | 4,11 | 25 |
| E7 (Erfindung) | Sapogenat® T 060 | 0,80 | 1,24 | 2,40 | 3,22 | 58 |
| E8 (Erfindung) | Sapogenat® T 060 | 0,78 | 1,25 | 2,76 | 4,32 | 58 |
| E9 (Erfindung) | Sapogenat® T 080 | 0,87 | 1,35 | 2,67 | 3,26 | 53 |
| E10 (Erfindung) | Sapogenat® T 080 | 0,83 | 1,32 | 2,86 | 4,13 | 55 |

### C11) Anwendungsbeispiel

Tropfengrößenverteilung für Flachstrahldüse TeeJet XR11002 (bei 3bar) unter Verwendung der Spritzbrühen E1 - E11 (Zusammensetzung siehe Tabelle 7).

**Tabelle 20**

| Sprühflüssigkeit | Testsubstanz | Vol 90 [Vol.-%] | Vol 105 [Vol.-%] | Vol 150 [Vol.-%] | Vol 210 / Vol 105 | Red 105 [%] |
|---|---|---|---|---|---|---|
| Wasser | Wasser | 25,74 | 35,83 | 62,10 | 3,99 | - |
| E1 (Erfindung) | TBPEM-6 | 13,36 | 19,80 | 40,67 | 3,25 | 43 |
| E2 (Erfindung) | TBPEM-6 | 12,97 | 19,16 | 39,62 | 3,31 | 45 |
| E3 (Erfindung) | TBPEM-8 | 18,78 | 27,27 | 51,51 | 2,72 | 24 |
| E4 (Erfindung) | TBPEM-8 | 17,67 | 25,84 | 49,76 | 2,81 | 28 |
| E6 (Erfindung) | TBPEM-Blend | 16,77 | 24,55 | 47,78 | 2,89 | 30 |
| E7 (Erfindung) | Sapogenat® T 060 | 15,40 | 22,67 | 45,03 | 3,02 | 35 |
| E8 (Erfindung) | Sapogenat® T 060 | 15,42 | 22,66 | 44,99 | 3,02 | 35 |
| E9 (Erfindung) | Sapogenat® T 080 | 17,55 | 25,76 | 49,73 | 2,82 | 28 |
| E10 (Erfindung) | Sapogenat® T 080 | 16,40 | 24,06 | 47,20 | 2,93 | 33 |

### C12) Anwendungsbeispiel

Tropfengrößenverteilung für Injektordüse ID(3)12002 (bei 3bar) unter Verwendung der Spritzbrühen F1 - F6 (Zusammensetzung siehe Tabelle 8).

**Tabelle 21**

| Sprühflüssigkeit | Testsubstanz | Vol 90 [Vol.-%] | Vol 105 [Vol.-%] | Vol 150 [Vol.-%] | Vol 210/ Vol 105 | Red 105 [%] |
|---|---|---|---|---|---|---|
| Wasser | - | 1,81 | 2,88 | 6,50 | 4,00 | - |
| F1 (Referenz) | - | 3,00 | 4,19 | 8,26 | 3,57 | -45 (Erhöhung) |
| F2 (Erfindung) | TBPEM-6 | 1,23 | 1,86 | 3,59 | 3,41 | 36 |
| F3 (Erfindung) | TBPEM-8 | 0,81 | 1,25 | 2,52 | 3,65 | 57 |
| F4 (Erfindung) | TBPEM-Blend | 0,76 | 1,20 | 2,59 | 4,03 | 58 |
| F5 (Erfindung) | Sapogenat® T 060 | 0,80 | 1,26 | 2,57 | 3,63 | 56 |
| F6 (Erfindung) | Sapogenat® T 080 | 0,81 | 1,25 | 2,51 | 3,66 | 57 |

### C13) Anwendungsbeispiel

Tropfengrößenverteilung für Flachstrahldüse TeeJet XR11002 (bei 3bar) unter Verwendung der Spritzbrühen F1 - F6 (Zusammensetzung siehe Tabelle 8).

**Tabelle 22**

| Sprühflüssigkeit | Testsubstanz | Vol 90 [Vol.-%] | Vol 105 [Vol.-%] | Vol 150 [Vol.-%] | Vol 210/ Vol 105 | Red 105 [%] |
|---|---|---|---|---|---|---|
| Wasser | - | 25,28 | 35,22 | 61,16 | 2,32 | 0,00 |
| F1 (Referenz) | - | 25,33 | 35,31 | 61,43 | 2,32 | -0,26 (Erhöhung) |
| F2 (Erfindung) | TBPEM-6 | 10,87 | 15,97 | 34,46 | 3,67 | 55 |
| F3 (Erfindung) | TBPEM-8 | 10,17 | 14,69 | 31,93 | 3,82 | 58 |
| F4 (Erfindung) | TBPEM-Blend | 12,59 | 18,50 | 38,20 | 3,33 | 47 |
| F5 (Erfindung) | Sapogenat® T 060 | 10,76 | 15,98 | 34,64 | 3,67 | 55 |
| F6 (Erfindung) | Sapogenat® T 080 | 10,59 | 15,30 | 32,89 | 3,72 | 57 |

### C14) Anwendungsbeispiel

Tropfengrößenverteilung für Injektordüse ID(3)12002 (bei 3bar) unter Verwendung der Spritzbrühen G1 - G6 (Zusammensetzung siehe Tabelle 9).

**Tabelle 23**

| Sprühflüssigkeit | Testsubstanz | Vol 90 [Vol.-%] | Vol 105 [Vol.-%] | Vol 150 [Vol.-%] | Vol 210/ Vol 105 | Red 105 [%] |
|---|---|---|---|---|---|---|
| Wasser | - | 1,81 | 2,88 | 6,50 | 4,00 | - |
| G1 (Referenz) | - | 3,00 | 4,19 | 8,26 | 3,57 | -45 (Erhöhung) |
| G2 (Erfindung) | TBPEM-6 | 1,29 | 1,94 | 3,76 | 3,42 | 33 |
| G3 (Erfindung) | TBPEM-8 | 0,80 | 1,28 | 2,91 | 4,58 | 56 |
| G4 (Erfindung) | TBPEM-Blend | 0,85 | 1,37 | 3,15 | 4,49 | 52 |
| G5 (Erfindung) | Sapogenat® T 060 | 0,81 | 1,25 | 2,57 | 3,76 | 57 |
| G6 (Erfindung) | Sapogenat® T 080 | 0,86 | 1,36 | 2,94 | 4,05 | 53 |

### C15) Anwendungsbeispiel

Tropfengrößenverteilung für Flachstrahldüse TeeJet XR11002 (bei 3bar) unter Verwendung der Spritzbrühen G1 - G6 (Zusammensetzung siehe Tabelle 9).

**Tabelle 24**

| Sprühflüssigkeit | Testsubstanz | Vol 90 [Vol.-%] | Vol 105 [Vol.-%] | Vol 150 [Vol.-%] | Vol 210/ Vol 105 | Red 105 [%] |
|---|---|---|---|---|---|---|
| Wasser | - | 25,28 | 35,22 | 61,16 | 2,32 | 0,00 |
| G1 (Referenz) | - | 25,33 | 35,31 | 61,43 | 2,32 | -0,26 (Erhöhung) |
| G2 (Erfindung) | TBPEM-6 | 11,86 | 17,45 | 36,80 | 3,48 | 50 |
| G3 (Erfindung) | TBPEM-8 | 15,44 | 22,75 | 45,18 | 3,01 | 35 |
| G4 (Erfindung) | TBPEM-Blend | 15,98 | 23,45 | 46,03 | 2,94 | 33 |
| G5 (Erfindung) | Sapogenat® T 060 | 14,94 | 22,02 | 44,01 | 3,06 | 37 |
| G6 (Erfindung) | Sapogenat® T 080 | 14,27 | 21,11 | 42,83 | 3,15 | 40 |

### C16) Anwendungsbeispiel

Tropfengrößenverteilung für Injektordüse ID(3)12002 (bei 3bar) unter Verwendung der Spritzbrühen H1 - H6 (Zusammensetzung siehe Tabelle 10).

**Tabelle 25**

| Sprühflüssigkeit | Testsubstanz | Vol 90 [Vol.-%] | Vol 105 [Vol.-%] | Vol 150 [Vol.-%] | Vol 210/ Vol 105 | Red 105 [%] |
|---|---|---|---|---|---|---|
| Wasser | - | 1,81 | 2,88 | 6,50 | 4,00 | - |
| H1 (Referenz) | - | 1,83 | 2,66 | 5,49 | 3,93 | 8 |
| H2 (Erfindung) | TBPEM-6 | 1,15 | 1,73 | 3,37 | 3,48 | 40 |
| H3 (Erfindung) | TBPEM-8 | 0,80 | 1,26 | 2,78 | 4,45 | 56 |
| H4 (Erfindung) | TBPEM-Blend | 0,850 | 1,334 | 3,032 | 4,57 | 54 |
| H5 (Erfindung) | Sapogenat® T 060 | 0,78 | 1,26 | 2,77 | 4,22 | 56 |
| H6 (Erfindung) | Sapogenat® T 080 | 0,81 | 1,29 | 2,78 | 4,04 | 55 |

### C17) Anwendungsbeispiel

Tropfengrößenverteilung für Flachstrahldüse TeeJet XR11002 (bei 3bar) unter Verwendung der Spritzbrühen H1 - H6 (Zusammensetzung siehe Tabelle 10).

**Tabelle 26**

| Sprühflüssigkeit | Testsubstanz | Vol 90 [Vol.-%] | Vol 105 [Vol.-%] | Vol 150 [Vol.-%] | Vol 210/ Vol 105 | Red 105 [%] |
|---|---|---|---|---|---|---|
| Wasser | - | 25,28 | 35,22 | 61,16 | 2,32 | 0,00 |
| H1 (Referenz) | - | 23,80 | 33,39 | 58,73 | 2,38 | 5 |
| H2 (Erfindung) | TBPEM-6 | 11,81 | 17,27 | 36,39 | 3,50 | 51 |
| H3 (Erfindung) | TBPEM-8 | 15,21 | 22,41 | 44,78 | 3,05 | 36 |
| H4 (Erfindung) | TBPEM-Blend | 17,357 | 25,318 | 48,805 | 2,83 | 28 |
| H5 (Erfindung) | Sapogenat® T 060 | 15,48 | 22,71 | 45,01 | 3,01 | 36 |
| H6 (Erfindung) | Sapogenat® T 080 | 14,19 | 21,00 | 42,78 | 3,17 | 40 |

### D) Dynamische Oberflächenspannung

Die dynamische Oberflächenspannung wurde über die Blasendruckmethode bestimmt (Tensiometer BP2100, Krüss). Bei einer für die Spritzapplikation von Agrochemikalien in wässriger Verdünnung relevanten Zeitspanne (dem sogenannten Oberflächenalter in der Blasendruckmethode) von 200 Millisekunden (ms) korreliert der Wert der dynamischen Oberflächenspannung in [mN/m] mit der Haftung auf schwer benetzbaren Pflanzen wie Gerste (Getreide). Ein Wert von 50 mN/m (bei 20 - 21 °C) ergibt gegenüber Wasser (72,8 mN/m) eine Verbesserung der Haftung von "Null Haftung" (0 %) auf etwa 50 % (Baur P., Pontzen R.; 2007; Basic features of plant surface wettability and deposit formation and the impact of adjuvant; in R. E. Gaskin ed. Proceedings of the 8th International Symposium on Adjuvant for Agrochemicals; Publisher: International Society for Agrochemical Adjuvant (ISAA), Columbus, Ohio, USA).

Aus der Literatur ist zudem bekannt, dass oberflächenaktive Substanzen, die die dynamische Oberflächenspannung erniedrigen, normalerweise einen negativen Einfluss auf den Spraydrift zeigen und zu Sprühnebel mit erhöhtem Feintropfenanteil führen (Hilz et al., Spray drift review: The extent to which a formulation can contribute to spray drift reduction, Crop Protection 44 (2013) 75 - 83). Überraschenderweise zeigen einige veretherte Tributylphenolalkoxylate trotz niedriger Dynamischen Oberflächenspannung exzellente driftreduzierende Eigenschaften (siehe Tabelle 27).

**Tabelle 27**

| Dynamische Oberflächenspannung bei 200 ms [mN/m] | | | |
|---|---|---|---|
| Testsubstanz | Menge 0,03 Gew.-% | Menge 0,1 Gew.-% | Menge 0,3 Gew.-% |
| Synergen® OS | 73,2 | 70,8 | 65,8 |
| Sapogenat® T 060 | 61,4 | 53,2 | 46,0 |
| Sapogenat® T 080 | 60,3 | 52,2 | 45,2 |
| TBPEM-6 | 56,0 | 47,8 | 36,4 |
| TBPEM-8 | 58,6 | 50,0 | 44,6 |
| | | | |

| Dynamische Oberflächenspannung bei 200 ms [mN/m] | | | |
|---|---|---|---|
| Testsubstanz | Menge 0,05 Gew.-% | Menge 0,1 Gew.-% | Menge 0,2 Gew.-% |
| TBPEM-Blend | 53,4 | 48,7 | 43,7 |

## Patentansprüche

1. Verwendung eines oder mehrerer Tributylphenolalkoxylate der Fomel (I), 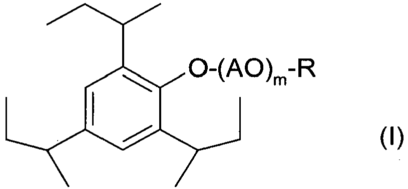 worin
R für unverzweigtes oder verzweigtes C₁-C₄-Alkyl, für unverzweigtes oder verzweigtes C₂-C₄-Alkenyl oder für Wasserstoff steht,
(AO)ₘ aufgebaut ist aus Ethylenoxid-Einheiten, aufgebaut ist aus Propylenoxid-Einheiten, aufgebaut ist aus Butylenoxid-Einheiten, aufgebaut ist aus Gemischen aus Ethylenoxid- und Propylenoxid-Einheiten oder aufgebaut ist aus Gemischen aus Ethylenoxid- und Butylenoxid-Einheiten, wobei
m im Mittel für eine Zahl von 1 bis 30 steht,
zur Verminderung der Drift bei der Applikation von Pflanzenbehandlungsmitteln.

2. Verwendung gemäß Anspruch 1, **dadurch gekennzeichnet, dass** A für einen 1,2-Ethylen-Rest, einen 1,2-Propylen-Rest, einen 1,2-Butylen-Rest oder für Gemische aus 1, 2-Ethylen- und 1, 2-Propylen-Resten oder für Gemische aus 1,2-Ethylen- und 1,2-Butylen-Resten steht.

3. Verwendung gemäß Anspruch 1 oder 2, **dadurch gekennzeichnet, dass**
R für unverzweigtes oder verzweigtes C₁-C₄-Alkyl oder für Wasserstoff steht,
A für einen 1,2-Ethylen-Rest, einen 1,2-Propylen-Rest oder für Gemische aus 1,2-Ethylen-und 1,2-Propylen-Resten steht und
m für eine Zahl von 2 bis 20 steht.

4. Verwendung gemäß einem oder mehreren der Ansprüche 1 bis 3, **dadurch gekennzeichnet, dass**
R für Methyl, Ethyl oder Wasserstoff steht,
A für einen 1,2-Ethylen-Rest steht, und
m für eine Zahl von 3 bis 10 steht.

5. Verwendung gemäß einem oder mehreren der Ansprüche 1 bis 4, **dadurch gekennzeichnet, dass** R für Methyl oder für Wasserstoff steht.

6. Verwendung gemäß einem oder mehreren der Ansprüche 1 bis 5, **dadurch gekennzeichnet, dass** m für eine Zahl von 5 bis 8 steht.

7. Verwendung gemäß einem oder mehreren der Ansprüche 1 bis 6, **dadurch gekennzeichnet, dass** eine Zusammensetzung enthaltend
a) ein oder mehrere 2,4,6-Tri-(2-butyl)phenolalkoxylate der Fomel (I) nach Anspruch 1,
b) ein oder mehrere weitere Tenside und
c) gegebenenfalls ein oder mehrere Lösemittel eingesetzt wird.

8. Verwendung gemäß Anspruch 7, **dadurch gekennzeichnet, dass** die Zusammensetzung
1 bis 90 Gew.-% an Komponente a),
1 bis 90 Gew.-% an Komponente b), und
0 bis 30 Gew.-% an Komponente c) enthält,
wobei die Prozentangaben sich jeweils auf das Gesamtgewicht der Zusammensetzung beziehen.

9. Verwendung gemäß einem oder mehreren der Ansprüche 1 bis 8, **dadurch gekennzeichnet, dass** das oder die Tributylphenolalkoxylate der Formel (I) zur Verminderung der Drift bei der Applikation von Pflanzenbehandlungsmitteln als Tank- Mix-Additiv eingesetzt werden, wobei das oder die Tributylphenolalkoxylate der Formel (I) erst direkt vor dem Ausbringen einer aus einer konzentrierten Formulierung des Pflanzenbehandlungsmittels hergestellten Spritzbrühe zugesetzt werden.

10. Verwendung gemäß einem oder mehreren der Ansprüche 1 bis 8, **dadurch gekennzeichnet, dass** das oder die Tributylphenolalkoxylate der Formel (I) zur Verminderung der Drift bei der Applikation von Pflanzenbehandlungsmitteln als in-can Variante eingesetzt werden, wobei das oder die Tributylphenolalkoxylate der Formel (I) zusammen mit den Inhaltsstoffen des Pflanzenbehandlungsmittels in eine konzentrierte Formulierung bereits eingebaut sind und als Spritzbrühe verdünnt mit Wasser ausgebracht werden.

11. Verwendung gemäß einem oder mehreren der Ansprüche 1 bis 10, **dadurch gekennzeichnet, dass** das oder die Tributylphenolalkoxylate der Formel (I) oder dass die Zusammensetzung enthaltend ein oder mehrere Tributylphenolalkoxylate der Formel (I) als anwendungsfertiges Pflanzenbehandlungsmittel in Form von Spritzbrühen eingesetzt werden, wobei die Menge des einen oder der mehreren Tributylphenolalkoxylate der Formel (I) in der Spritzbrühe von 0,001 bis 5 Gew.-% beträgt, jeweils bezogen auf das Gesamtgewicht der Spritzbrühe.

12. Verfahren zur Verminderung der Drift bei der Applikation eines Pflanzenbehandlungsmittels, **dadurch gekennzeichnet, dass** eine Spritzbrühe enthaltend ein oder mehrere Tributylphenolalkoxylate der Fomel (I) nach Anspruch 1 auf die zu behandelnden Pflanzen oder deren Ort aufgesprüht wird.

## Claims

1. Use of one or more tributylphenol alkoxylates of the formula (I) 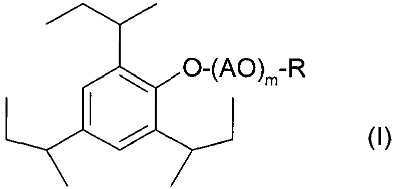 in which
R is unbranched or branched C₁-C₄-alkyl, is unbranched or branched C₂-C₄-alkenyl or is hydrogen,
(AO)ₘ is formed from ethylene oxide units, is formed from propylene oxide units, is formed from butylene oxide units, is formed from mixtures of ethylene oxide and propylene oxide units or is formed from mixtures of ethylene oxide and butylene oxide units, where
m on average is a number from 1 to 30,
for reducing drift in the application of crop treatment compositions.

2. Use according to Claim 1, wherein A is a 1,2-ethylene radical, a 1,2-propylene radical, a 1,2-butylene radical or mixtures of 1,2-ethylene and 1,2-propylene radicals or mixtures of 1,2 ethylene and 1,2-butylene radicals.

3. Use according to Claim 1 or 2, wherein
R is unbranched or branched C₁-C₄-alkyl or is hydrogen,
A is a 1,2-ethylene radical, a 1,2-propylene radical or is mixtures of 1,2-ethylene and 1,2-propylene radicals and
m is a number from 2 to 20.

4. Use according to one or more of Claims 1 to 3, wherein
R is methyl, ethyl or hydrogen,
A is a 1,2-ethylene radical, and
m is a number from 3 to 10.

5. Use according to one or more of Claims 1 to 4, wherein R is methyl or hydrogen.

6. Use according to one or more of Claims 1 to 5, wherein m is a number from 5 to 8.

7. Use according to one or more of Claims 1 to 6, wherein a composition comprising
a) one or more 2,4,6-tri(2-butyl)phenol alkoxylates of the formula (I) according to Claim 1,
b) one or more further surfactants and
c) optionally one or more solvents is used.

8. Use according to Claim 7, wherein the composition comprises
1% to 90% by weight of component a),
1% to 90% by weight of component b), and
0% to 30% by weight of component c),
where the percentages are each based on the total weight of the composition.

9. Use according to one or more of Claims 1 to 8, wherein the tributylphenol alkoxylate(s) of the formula (I) is/are used as tankmix additive for reducing drift in the application of crop treatment compositions, where the tributylphenol alkoxylate(s) of the formula (I) is/are added to a spray liquor produced from a concentrated formulation of the crop treatment composition only directly prior to deployment.

10. Use according to one or more of Claims 1 to 8, wherein the tributylphenol alkoxylate(s) of the formula (I) is/are used as an in-can variant for reducing drift in the application of crop treatment compositions, where the tributylphenol alkoxylate(s) of the formula (I) are already incorporated into a concentrated formulation together with the constituents of the crop treatment composition and are deployed as a spray liquor having been diluted with water.

11. Use according to one or more of Claims 1 to 10, wherein the tributylphenol alkoxylate(s) of the formula (I) or the composition comprising one or more tributylphenol alkoxylate(s) of the formula (I) is used in the form of a ready-to-use crop treatment composition in the form of spray liquors, where the amount of the one or more tributylphenol alkoxylate(s) of the formula (I) in the spray liquor is from 0.001% to 5% by weight, based in each case on the total weight of the spray liquor.

12. Method of reducing drift in the application of a crop treatment composition, which comprises spraying a spray liquor comprising one or more tributylphenol alkoxylates of the formula (I) according to Claim 1 onto the plants to be treated or the site thereof.

## Revendications

1. Utilisation d'un ou de plusieurs alcoxylates de tributylphénol de la formule (I) : 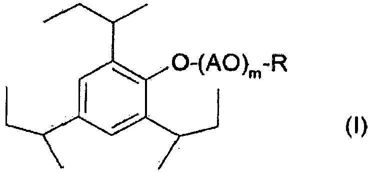 dans laquelle
R représente un alkyle en C₁-C₄ non ramifié ou ramifié, un alcényle en C₂-C₄ non ramifié ou ramifié, ou l'hydrogène,
(AO)ₘ est formé par des unités oxydes d'éthylène, est formé par des unités oxyde de propylène, est formé par des unités oxyde de butylène, est formé par des mélanges d'unités oxyde d'éthylène et oxyde de propylène, ou est formé par des mélanges d'unités oxyde d'éthylène et oxyde de butylène,
m représentant en moyenne un nombre de 1 à 30,
pour réduire la dérive lors de l'application d'agents de traitement des plantes.

2. Utilisation selon la revendication 1, **caractérisée en ce qu'**A représente un radical 1,2-éthylène, un radical 1,2-propylène, un radical 1,2-butylène ou des mélanges de radicaux 1,2-éthylène et 1,2-propylène, ou des mélanges de radicaux 1,2-éthylène et 1,2-butylène.

3. Utilisation selon la revendication 1 ou 2, **caractérisée en ce que**
R représente un alkyle en C₁-C₄ non ramifié ou ramifié, ou l'hydrogène,
A représente un radical 1,2-éthylène, un radical 1,2-propylène ou des mélanges de radicaux 1,2-éthylène et 1,2-propylène, et
m représente un nombre de 2 à 20.

4. Utilisation selon une ou plusieurs des revendications 1 à 3, **caractérisée en ce que**
R représente méthyle, éthyle ou hydrogène,
A représente un radical 1,2-éthylène, et
m représente un nombre de 3 à 10.

5. Utilisation selon une ou plusieurs des revendications 1 à 4, **caractérisée en ce que** R représente méthyle ou hydrogène.

6. Utilisation selon une ou plusieurs des revendications 1 à 5, **caractérisée en ce que** m représente un nombre de 5 à 8.

7. Utilisation selon une ou plusieurs des revendications 1 à 6, **caractérisée en ce qu'**une composition contenant :
a) un ou plusieurs alcoxylates de 2,4,6-tri-(2-butyl)phénol de la formule (I) selon la revendication 1,
b) un ou plusieurs tensioactifs supplémentaires, et
c) éventuellement un ou plusieurs solvants est utilisée.

8. Utilisation selon la revendication 7, **caractérisée en ce que** la composition contient :
1 à 90 % en poids du composant a),
1 à 90 % en poids du composant b) et
0 à 30 % en poids du composant c),
les données de pourcentage se rapportant à chaque fois au poids total de la composition.

9. Utilisation selon une ou plusieurs des revendications 1 à 8, **caractérisée en ce que** le ou les alcoxylates de tributylphénol de la formule (I) sont utilisés pour réduire la dérive lors de l'application d'agents de traitement des plantes en tant qu'additif de mélange en cuve, le ou les alcoxylates de tributylphénol de la formule (I) n'étant ajoutés que directement avant l'application d'une bouillie de pulvérisation fabriquée à partir d'une formulation concentrée de l'agent de traitement de plantes.

10. Utilisation selon une ou plusieurs des revendications 1 à 8, **caractérisée en ce que** le ou les alcoxylates de tributylphénol de la formule (I) sont utilisés pour réduire la dérive lors de l'application d'agents de traitement des plantes en tant que variante en boîte, le ou les alcoxylates de tributylphénol de la formule (I) étant déjà incorporés conjointement avec les constituants de l'agent de traitement des plantes dans une formulation concentrée, et étant appliqués sous la forme d'une bouillie de pulvérisation diluée avec de l'eau.

11. Utilisation selon une ou plusieurs des revendications 1 à 10, **caractérisée en ce que** le ou les alcoxylates de tributylphénol de la formule (I) ou la composition contenant un ou plusieurs alcoxylates de tributylphénol de la formule (I) sont utilisés en tant qu'agent de traitement des plantes prêt à l'utilisation sous la forme de bouillies de pulvérisation, la quantité du ou des alcoxylates de tributylphénol de la formule (I) dans la bouillie de pulvérisation étant de 0,001 à 5 % en poids, à chaque fois par rapport au poids total de la bouillie de pulvérisation.

12. Procédé de réduction de la dérive lors de l'application d'un agent de traitement des plantes, **caractérisé en ce qu'**une bouillie de pulvérisation contenant un ou plusieurs alcoxylates de tributylphénol de la formule (I) selon la revendication 1 est pulvérisée sur les plantes à traiter ou leur emplacement.
